# EUROPÄISCHE PATENTSCHRIFT

(11) **EP 4 191 230 B1**
(45) Veröffentlichungstag und Bekanntmachung des Hinweises auf die Patenterteilung: **07.08.2024**
(21) Anmeldenummer: 23152916.5
(22) Anmeldetag: 14.04.2020
(51) Int. Cl.: G01N 21/3554, G01N 21/3563, G01N 21/89, G01N 21/359, G01N 21/84, G01N 21/86, G01N 21/27, G01N 21/57

(54) **VERFAHREN ZUR GLEICHZEITIGEN BESTIMMUNG VON PARAMETERN VON MINDESTENS EINER AUF MINDESTENS EINEM TRÄGERMATERIAL AUFGETRAGENEN HARZSCHICHT**
METHOD FOR SIMULTANEOUSLY DETERMINING PARAMETERS OF AT LEAST ONE RESIN LAYER APPLIED TO AT LEAST ONE SUPPORT MATERIAL
PROCÉDÉ DE DÉTERMINATION SIMULTANÉE DE PARAMÈTRES D'AU MOINS UNE COUCHE DE RÉSINE APPLIQUÉE SUR AU MOINS UN MATÉRIAU SUPPORT

(30) Priorität: 27.03.2020 EP 20166313
(43) Veröffentlichungstag der Anmeldung: 07.06.2023
(62) Teilanmeldung aus: 20169323.1
(73) Patentinhaber: Flooring Technologies Ltd., Kalkara SCM1001 (MT)
(72) Erfinder: KALWA, Norbert, 32805 Horn-Bad Meinberg (DE)
(74) Vertreter: Maikowski & Ninnemann Patentanwälte Partnerschaft mbB

(56) Entgegenhaltungen:
- EP-A1- 2 915 658
- EP-A1- 3 428 619
- WO-A1-2016/162196
- DE-A1- 102015 105 039
- US-A1- 2003 048 440

## Beschreibung

Die vorliegende Erfindung betrifft ein Verfahren zur gleichzeitigen Bestimmung von Parametern, insbesondere von mindestens zwei Parameter, von mindestens einer auf mindestens einem Trägermaterial aufgetragenen Harzschicht, eine Produktionslinie zur Durchführung dieses Verfahrens und die Verwendung der bestimmten Parameter zur Steuerung mindestens einer solchen Produktionslinie.

### Beschreibung

Bei der Herstellung von industriellen "Prepregs" (Imprägnaten, z.B harzimprägnierte Papierlagen) oder von Oberflächenbeschichtungen in der Holzwerkstoffindustrie werden Trägermaterialien mit Imprägnierharzen, Lacken usw. imprägniert bzw. beschichtet. Dabei ist es essentiell, dass vorgegebene Parameter ( Zusammensetzung, Auftragsmenge, Feuchte, Vernetzungsgrad usw. ) möglichst genau eingehalten werden. Dadurch, dass meist mehrere Parameter gleichzeitig bestimmt werden müssen, erhöht sich der Prüfaufwand. Erschwerend wirkt sich auch häufig aus, dass diese Parameter nicht automatisch sondern z. B. durch Auswiegen bestimmt werden müssen. Dies führt zu Zeitverlust und ist besonders dann problematisch, wenn es sich um schnell laufende Anlagen handelt, da möglicherweise bis zur Bestimmung bzw. Anpassung der Parameter viel Zeit vergeht. Zur Lösung dieses Problems werden mehr und mehr Messsysteme eingesetzt, die einzelne Parameter bestimmen.

Es ist zum Beispiel bekannt, dass gemäß der DE 10 2025 105 039 A1 einzelne Parameter an einer Imprägnieranlage durch ein NIR-Messverfahren (NIR = Near-InfraRed) bestimmt werden können. Diese Parameterbestimmung kann dann zur Steuerung der Anlage genutzt werden. Allerdings ist jeweils nur die Bestimmung einzelner Parameter vorgesehen. Zu dem bleibt unklar in welcher Form die Steuerung dann vorgenommen werden soll.

Jedoch muss beispielsweise an einer Imprägnieranlage, in der Papiere mit duroplastischen Harzen imprägniert werden, ein ganzer Satz von Parametern geprüft werden. Es handelt sich dabei um den Harz-/Lackauftrag, die Feuchte, den Vernetzungsgrad, den Gehalt an mineralischen Bestandteilen (Korund, Titandioxid, Kreide, Farbpigmente usw.) usw. Für die Bestimmung dieser Vielzahl von Parametern musste in der Vergangenheit eine Kombination aus mehreren automatischen und/oder manuellen Messverfahren verwendet werden.

Dabei ist die manuelle Messung die schlechteste Methode, da sie nur punktuelle Messwerte liefert. In der übrigen Zeit, die nicht durch Messungen überwacht wird, wird vorausgesetzt, dass sich die Anlagenparameter nicht gravierend ändern. Teilweise nehmen die manuellen Prüfungen (Z. B: Veraschungen) auch einen relativ langen Zeitraum in Anspruch, was zu verlängerten Reaktionszeiten führt.

Aus den bisherigen Ansätzen ergibt sich somit eine Vielzahl von Nachteilen. Da Imprägnate bzw. Oberflächenbeschichtungen auf Trägerplatten Multiparametersysteme sind, ist die Bestimmung aller Parameter mit einem großem Zeitverlust sowie einem erhöhten Verlust an Material und Produktionszeit verbunden. Auch sind teilweise nur punktuelle Prüfungen möglich.

Es wird daher ein Messverfahren bereitgestellt, mit dem durch einen einzelnen Messkopf eine Vielzahl von Parameter bestimmt werden kann ("Multimesskopf"). Dieser Multimesskopf soll flexibel für papierförmige, partikelförmige oder plattenförmige Werkstoffe als Endloswarenbahn oder Formatware einsetzbar sein.

So wird ein Verfahren zur gleichzeitigen Bestimmung von mehreren Parametern, insbesondere von mindestens zwei, drei oder vier Parametern, von mindestens einer auf mindestens einem Trägermaterial aufgetragenen Harzschicht durch Aufnahme und Auswertung von mindestens einem NIR-Spektrum in einem Wellenlängenbereich zwischen 500 nm und 2500 nm, bevorzugt zwischen 700 nm und 2000 nm, insbesondere bevorzugt zwischen 900 nm und 1700 nm unter Verwendung von mindestens einem NIR-Messkopf, insbesondere von mindestens einem NIR-Multimesskopf, bereitgestellt.

Es wird eine NIR-Strahlung erzeugt und auf die zu analysierende Trägermaterial-Probe geleitet, auf die eine oder mehrere Harzschichten aufgebracht sind, wo die NIR-Strahlung mit den Bestandteilen der Probe wechselwirkt und reflektiert bzw. gestreut wird. Ein NIR-Detektor fängt die reflektierte bzw. gestreute NIR-Strahlung auf und erzeugt ein NIR-Spektrum, das die gewünschten chemischen Informationen der Probe beinhaltet. Bei dieser Messung werden in einer Sekunde eine Vielzahl von einzelnen NIR-Messungen durchgeführt, sodass auch eine statistische Absicherung der gemessenen Werte gewährleistet wird. Die NIR-Spektroskopie zusammen mit der (unten angeführten) Multivariaten Datenanalyse bietet eine Möglichkeit an, einen direkten Bezug zwischen den spektralen Informationen (NIR-Spektren) und den zu bestimmenden Parametern der aufgebrachten Harzschicht herzustellen.

Das vorliegende Verfahren nutzt den Umstand aus, dass die NIR-Strahlung nicht durch das Trägermaterial hindurch dringt, sondern bereits an der Oberfläche des Trägermaterials weitestgehend reflektiert bzw. gestreut wird. Die NIR-Strahlung dringt demnach im vorliegenden Verfahren durch die aufgetragene Harzschicht durch und wird an der Oberfläche des unter der Harzschicht befindlichen Trägermaterials weitestgehend reflektiert bzw. gestreut. Die reflektierte bzw. gestreute NIR-Strahlung wird von dem NIR-Detektor erfasst, und das ermittelte NIR-Spektrum wird zur Bestimmung der gewünschten Parameter verwendet. Teile der NIR-Strahlung werden demnach beim zweimaligen Durchgang durch die Harzschicht (auf dem Weg zur Oberfläche des Trägers und nach der Reflektion bzw. Streuung an dieser Oberfläche des Trägers auf dem Weg zurück) in charakteristischer Weise von der Harzschicht und den darin befindlichen anderen Materialien absorbiert, wodurch die Schicht spezifischen NIR-Spektren der reflektierten bzw. gestreuten Strahlung erzeugt werden. Die Messung und Auswertung der erzeugten NIR-Spektren dient der Bestimmung bestimmter Parameter, die diese Harzschicht und die darin enthaltenen anderen Materialien kennzeichnen.

Die gleichzeitig zu bestimmenden Parameter sind aus einer Gruppe umfassend die Menge der aufgetragenen Harzschicht, den Aushärtungsgrad und Vernetzungsgrad der aufgetragenen Harzschicht, den Feuchtegehalt der aufgetragenen Harzschicht, die Abriebfestigkeit und Menge von ggfs. auf die Harzschicht aufgestreuten abriebfesten Partikeln oder weiteren Feststoffer ausgewählt.

Demnach können mit dem vorliegenden Verfahren gleichzeitig Menge und/oder der Vernetzungsgrad und/oder Aushärtungsgrad und/oder Feuchtegehalt der aufgetragenen Harzschicht und/oder Menge und/oder Abriebfestigkeit von auf die Harzschicht aufgestreuten abriebfesten Partikeln oder weiteren Feststoffen ermittelt werden. Bevorzugt werden die vier Parameter Menge, Vernetzung und Feuchtegehalt der aufgetragenen Harzschicht und Menge von auf die Harzschicht aufgestreuten abriebfesten Partikeln gleichzeitig bestimmt. Es ist aber auch möglich lediglich die zwei Parameter Menge und Feuchtegehalt der aufgetragenen Harzschicht oder die drei Parameter Menge, Vernetzung und Feuchtegehalt der aufgetragenen Harzschicht gleichzeitig zu bestimmen oder andere Kombinationen aus der Gruppe der zuvor genannten Parameter.

Es wird somit ein Verfahren bereitgestellt, in welchem durch die Verwendung eines NIR-Messkopfes, die oben angesprochenen Parameter aus einem einzigen NIR-Spektrum bzw. der Reflektion bzw. Streuung von NIR-Strahlung bestimmen werden können, und zwar durch eine berührungslose Messung. Bei Differenzmessungen ist auch der Einsatz mehrerer Messköpfe in einer Produktionslinie möglich. Die mit dem Messkopf oder den Messköpfen ermittelten Daten werden direkt zur Anlagensteuerung oder -regelung verwendet. Zudem wird durch die Speicherung der Daten eine Verbesserung der Qualitätskontrolle ermöglicht. Auch bei Anlagenversuchen können die gespeicherten Daten vorteilhaft einen Beitrag zur Auswertung liefern, z.B. Inbetriebnahme einer Anlage bei Neuinstallation oder nach einer Wartung oder Reparatur oder zu in-situ Testzwecken von neuen Produktions- oder Messverfahren. Durch das sofortige Vorliegen der Messwerte und der hohen Messfrequenz wird eine sehr enge Kontrolle bzw. Steuerung oder Regelung der Anlagen ermöglicht.

Das vorliegende Verfahren ermöglicht die Bereitstellung der Messwerte in kurzer Zeit (online, bevorzugt ohne störende Zeitverzögerung) im Vergleich zu herkömmlichen (bekannten) Messverfahren. Die Messdaten können zur Qualitätssicherung, Forschung und Entwicklung, zur Prozesskontrolle, Prozessregelung, Prozesssteuerung usw. eingesetzt werden. Durch den Messvorgang wird die Produktionsgeschwindigkeit usw. nicht reduziert. Grundsätzlich wird damit die Überwachung der Produktion verbessert. Zudem werden auch Stillstandszeiten durch Qualitätsbestimmungen und Anlagenjustierungen reduziert.

Die Vorteile des vorliegenden Verfahrens sind vielfältig: Berührungslose Multiparameterbestimmung ("real time"- oder "Echtzeit"-Messung) mit deutlich reduzierter zeitlicher Verzögerung in der Auswertung der gemessenen Parameterwerte; verbesserte Anlagensteuerung bzw. -regelung, Verringerung des Ausschusses, Verbesserung der Qualität der auf der Anlage hergestellten Produkte, Verbesserung der Anlagenverfügbarkeit.

Das vorliegende Verfahren umfasst die folgenden Schritte:
- Aufnahme von jeweils mindestens einem NIR-Spektrum von mehreren Referenzproben mit jeweils unterschiedlichem Werten der gewünschten Parameter unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmung der gewünschten Parameter der genannten Referenzproben mittels nicht-spektroskopischer Methoden;
- Zuordnung der für die Referenzproben bestimmten Parameter zu den aufgenommenen NIR-Spektren der genannten Referenzproben;
- Erstellung eines Kalibriermodells für den Zusammenhang zwischen den spektralen Daten der NIR-Spektren und den dazugehörigen Parameterwerten mittels einer multivariaten Datenanalyse;
- Auftragen von mindestens einer Harzschicht auf mindestens eine Seite des Trägermaterials;
- Aufnehmen von mindestens einem NIR-Spektrum der auf das Trägermaterial aufgetragenen Harzschicht unter Verwendung des mindestens einen NIR-Detektors in einem Wellenlängenbereich zwischen 500 nm und 2500 nm, bevorzugt zwischen 700 nm und 2000 nm, insbesondere bevorzugt zwischen 900 nm und 1700 nm;
- Bestimmen der gewünschten Parameter der auf das Trägermaterial aufgetragenen Harzschicht durch Vergleich des für die Harzschicht aufgenommenen NIR-Spektrums mit dem erstellten Kalibriermodell.

Es werden demnach zunächst Referenzproben des mit einem Harz beschichteten Trägermaterials bereitgestellt. Wesentlich ist, dass die Referenzprobe gleichartig zu der zu vermessenden Probe ist; d.h. insbesondere die Harzschicht der Referenzprobe weist die gleiche Zusammensetzung wie die zu vermessende Harzschicht auf. Die Gleichartigkeit von zu vermessender Probe und Referenzprobe ist insbesondere bei Verwendung von flüssigen Harzschichten mit Zusatzstoffen wie Flammschutzmitteln, Fasern, weiteren Additiven wesentlich.

Von diesen Referenzproben werden zumindest ein NIR-Spektrum in einem Wellenlängenbereich zwischen 500 nm und 2500 nm, bevorzugt zwischen 700 nm und 2000 nm, insbesondere bevorzugt zwischen 900 nm und 1700 nm aufgenommen.

Diese Referenzproben werden ebenfalls einer nicht-spektroskopischen Analyse zur Bestimmung der gewünschten Parameter, d.h. Menge, Aushärtungsgrad, Vernetzungsgrad, Feuchtegrad der auf das Trägermaterial aufgetragenen Harzmenge und Menge an aufgetragenen Partikeln und deren Abriebfestigkeit (oder eine Auswahl dieser Parameter) zugeführt. Die nicht-spektroskopischen Analysen werden weiter unten im Detail für jeden der genannten Parameter beschrieben.

Aus den jeweils mittels der nicht-spektroskopischen Analyse ermittelten Parameter für die Referenzproben wird ein Mittelwert gebildet, welcher dann den jeweils aufgenommen NIR-Spektren dieser Referenzproben zugeordnet wird, und es wird ein Kalibriermodell für den Zusammenhang zwischen den spektralen Daten der NIR-Spektren der Referenzproben und den dazugehörigen Parameterwerten mittels einer multivariaten Datenanalyse erstellt; d.h. zu jedem Parameterwert der Referenzprobe korrespondiert ein NIR-Spektrum der Referenzprobe. Die für die verschiedenen Parameter erstellten Kalibriermodelle werden in einem geeigneten Datenspeicher hinterlegt.

Anschließend wird mindestens eine Harzschicht auf mindestens eine Seite des Trägermaterials aufgetragen und mindestens ein NIR-Spektrum der auf das Trägermaterial aufgetragenen Harzschicht aufgenommen. Der gewünschte Parameter der auf das Trägermaterial aufgetragenen Harzschicht kann dann durch Vergleich des für die Harzschicht aufgenommenen NIR-Spektrums mit dem erstellten Kalibriermodell bestimmt werden.

Es ist somit möglich, aus einem einzigen für die zu vermessende Probe ermitteltem NIR-Spektrums durch einen automatisierten Vergleich bzw. Abgleich mit den für die jeweiligen Parameter erstellten Kalibriermodellen gleichzeitig mehrere interessierende Parameter der auf ein Trägermaterial aufgetragenen Harzschicht zu bestimmen.

Ein Vergleich und die Interpretation der NIR-Spektren erfolgt sinnvollerweise über den gesamten aufgenommenen Spektralbereich. Dies wird vorteilhaft mit einer an sich bekannten multivariaten Datenanalyse (MDA) durchgeführt. Bei multivariaten Analysemethoden werden in an sich bekannter Weise typischerweise mehrere statistische Variablen zugleich untersucht. Hierzu wird bei diesen Methoden üblicherweise die in einem Datensatz enthaltene Zahl von Variablen reduziert, ohne gleichzeitig die darin enthaltene Information zu mindern.

Im vorliegenden Fall erfolgt die multivariate Datenanalyse über das Verfahren der Partial Least Squares Regression (partielle Regression der kleinsten Quadrate, PLS) wodurch ein geeignetes Kalibrationsmodell erstellt werden kann. Die Auswertung der gewonnenen Daten wird bevorzugt mit einer geeigneten Analysesoftware vorgenommen wie z.B. mit der Analysesoftware SIMCA-P der Firma Umetrics AB oder The Unscrambler der Firma CAMO.

Für die Erstellung des Kalibriermodells werden spektrale Daten aus dem NIR- Spektralbereich zwischen 1450 und 1550 nm verwendet, die mittels geeigneter mathematischer Methoden vorbehandelt werden und anschließend der multivariaten Datenanalyse zugeführt werden.

Die Bedeutung einer Wellenlänge für die Vorhersage von Parametern der Harzschicht, wie z.B. der Harzmenge, aus dem NIR-Spektrum wird mit Hilfe der Regressionskoeffizienten dargestellt. Dabei haben die Regionen mit großen Koeffizientenbeträgen starken Einfluss auf das Regressionsmodell. So zeigt die Darstellung der Regressionskoeffizienten in einem PLS-Regressionsmodell für die Bestimmung der Harzmenge bzw. des Harzgehaltes, dass der Wellenlängenbereich zwischen 1460 nm und 1530 mit Maximum bei 1490 nm (Absorptionsbande der Amino-Gruppen des Harzes) für die Berechnung des Modells am wichtigsten ist, da hier die Beträge der Regressionskoeffizienten am größten sind. Die anderen Bereiche im Spektrum haben zwar geringeren Informationsgehalt in Bezug auf die NIR-Messung, tragen aber dennoch dazu bei, die weiteren Informationen bzw. störenden Einflussgrößen (wie Transparenz der Schicht, Oberflächenbeschaffenheit der Harzschicht oder des Trägermaterials usw.) zu berücksichtigen bzw. zu minimieren.

Zur Eliminierung von störenden Einflüssen (wie z.B. Beschaffenheit der Oberfläche des Trägermaterials, Farbigkeit der Proben, Lichtstreuung an Feststoffpartikeln oder anderen Additiven usw.) ist es notwendig, die spektralen Daten mit mathematischen Vorbehandlungsmethoden (z. B. derivative Datenvorbehandlung, Standardisierung gemäß SNVT (Standard Normal Variate Transformation), multiplikative Signal-Korrektur (EMSC, Extended Multiplicative Signal Correction usw.) zu bearbeiten. Dabei werden die Basislinieneffekte, die hauptsächlich durch die unterschiedliche Farbe der Proben verursacht werden, aus den Spektren entfernt, überlagernde Banden voneinander getrennt und die Abhängigkeit der Lichtstreuung an der Substratoberfläche oder an den Feststoffpartikeln in der Beschichtung berücksichtigt. Soll z.B. die Harzauftragsmenge auf unbehandelten Oberflächen von Trägermaterialien wie z.B. Holzwerkstoffplatten bestimmt werden, erfolgt die Datenvorbehandlung bevorzugt zur Reduzierung der Lichtstreuung an der rauen Oberfläche des Substrates. Bei der Messung auf Dekorschicht liegt der Schwerpunkt der Kalibrierung und Datenvorbehandlung auf der Entfernung der Basislinienverschiebung.

Aus den vorbehandelten Daten wird mit Hilfe der multivariaten Datenanalyse ein Kalibriermodell entwickelt, das alle bei der Kalibrierung verwendeten Dekore beinhaltet. Entsprechend erfolgen der Vergleich und die Interpretation der NIR-Spektren bevorzugt im Spektralbereich zwischen 1450 und 1550 nm unter Verwendung der multivariaten Datenanalyse MDA. Bei multivariaten Analysemethoden werden in an sich bekannter Weise typischerweise mehrere statistische Variablen zugleich untersucht. Hierzu wird die in einem Datensatz enthaltene Zahl von Variablen reduziert, ohne gleichzeitig die darin enthaltene Information zu mindern.

Als Trägermaterial kann eine Papierlage verwendet werden. Als Papierlage kommen z.B. Overlaypapiere, Dekorpapiere, oder Kraftpapiere zum Einsatz. Overlaypapiere sind dünne Papiere, welche typischerweise bereits mit einem konventionellen Melaminharz getränkt wurden Es sind ebenfalls Overlaypapiere erhältlich, in denen bereits abriebfeste Partikel, wie zum Beispiel Korundpartikel in das Harz des Overlays eingemischt sind, um die Abriebfestigkeit zu erhöhen. Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein. Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen.

In einem Beispiel ist das Trägermaterial teilweise oder vollständig mit dem Harz imprägniert, wobei das Harz in das Trägermaterial eindringt bzw. hinein penetriert. Eine Imprägnierung erfolgt insbesondere bei Verwendung von Papierlagen als Trägermaterial. Vorliegend ist unter dem Begriff der "Imprägnierung" eine vollständige oder teilweise Durchtränkung der Papierlage mit dem Harz zu verstehen. Derartige Imprägnierungen können z.B. in einem Imprägnierbad, durch Walzen, durch Rasterwalzen, durch Aufrakeln oder auch durch Besprühen aufgebracht werden.

In einem weiteren Beispiel des vorliegenden Trägermaterials kann auch vorgesehen sein, dass die Harzschicht nicht in das Trägermaterial eindringt, sondern vielmehr auf der Oberfläche des Trägermaterials aufgetragen ist. Dies ist insbesondere im Falle der Verwendung einer Trägerplatte als Trägermaterial der Fall. Hierbei ist das mindestens eine vorgehärtete Harz auf mindestens einer Oberfläche bzw. einer Seite, d.h. Oberseite und/oder Unterseite, der Trägerplatte angeordnet. Als Oberfläche wird dabei ein ein- oder mehrschichtiger Aufbau auf dem Trägermaterial verstanden.

Im Falle einer Trägerplatte als Trägermaterial ist diese bevorzugt eine Platte aus einem Holzwerkstoff, aus Kunststoff, einem Holzwerkstoff-Kunststoff-Gemisch oder einem Verbundwerkstoff, insbesondere eine Span-, mitteldichte Faser (MDF)-, hochdichte Faser (HDF)-, Grobspan (OSB)- oder Sperrholzplatte, eine Zementfaserplatte, Gipsfaserplatte oder eine WPC-Platte (Wood Plastic Composites) oder eine SPC-Platte (Stone Plastic Composite).

Die Oberfläche des Trägermaterials kann oberflächenbehandelt sein, z.B. im Falle einer Holzwerkstoff-Trägerplatte kann die Oberfläche abgeschliffen sein oder auch nichtabgeschliffen sein und mit einer Presshaut versehen sein. Im Falle einer Kunststoff-Trägerplatte kann die Oberfläche koronabehandelt sein.

Die aufgetragene Harzschicht kann demnach als Flüssigoverlay auf einer Trägerplatte oder als Teil- oder Vollimprägnat einer Papierlage vorliegen.

Die auf das Trägermaterial aufzutragende Harzschicht besteht aus einem formaldehydhaltigen Harz, bevorzugt einem Melamin-Formaldehyd-Harz, einem Harnstoff-Formaldehyd-Harz oder Gemischen aus beiden. Der Feststoffgehalt der Harzschicht liegt zwischen 30 und 80 Gew.%, bevorzugt zwischen 50 und 65 Gew.%.

In einer Variante des vorliegenden Verfahrens, wird das flüssige Harz in einer Menge zwischen 50 und 150 g/m², bevorzugt zwischen 60 und 100 g/m², insbesondere bevorzugt zwischen 70 und 80 g/m² auf die Oberfläche des Trägermaterials, insbesondere im Falle von Holzwerkstoffplatten. Im Falle von Papierlagen liegt der Harzauftrag in einem Bereich zwischen 200 bis 400%, bevorzugt 300%.

Wie bereits angedeutet, kann das Trägermaterial mit einem Dekor versehen sein. Dies kann eine Dekorpapierlage oder auch eine im Direktdruck auf eine Holzwerkstoffplatte aufgetragene Dekorschicht sein.

In dem Fall des Auftrags der Harzschicht auf eine Dekorschicht ist ein zusätzlicher Schritt bei der Erstellung des Kalibriermodells sinnvoll. Entsprechend werden in einer weitergehenden Variante des vorliegenden Verfahrens die für die Erstellung des Kalibriermodells verwendeten spektralen Daten aus dem NIR-Spektralbereich zwischen 1450 und 1550 nm nach der Vorbehandlung mit geeigneten mathematischen Methoden in mindestens drei Gruppen aufgeteilt, die jeweils einem Dekor mit einem ähnlichen Farbton entsprechen, und anschließend der multivariaten Datenanalyse zugeführt werden.

Dabei werden die spektralen Daten bevorzugt in eine erste Gruppe für ein Dekor mit hellem Farbton, eine zweite Gruppe mit einem mittleren Farbton und eine dritte Gruppe mit einem dunklen Farbton aufgeteilt.

Demnach wird in dieser Variante des vorliegenden Verfahrens zusätzlich zur mathematischen Vorbehandlung der NIR-Spektren, die den Dekoreffekt nicht vollständig eliminiert, die Reduzierung des dekorbedingten Effektes durch Aufteilung der Proben in Gruppen mit ähnlicher Dekorfarbe durchgeführt.

Dazu werden alle bei der Kalibrierung verwendeten Dekore in drei Gruppen ihrem Farbton entsprechend aufgeteilt. Die Gruppe 1 beinhaltet helle und die Gruppe 2 mittlere Dekore. In der Gruppe 3 werden Kalibrierproben der dunklen Dekore zusammengefasst. Durch die Aufteilung des gesamten Modells in drei Gruppen-Modelle nach dem Farbton der produzierten Dekore kann die systematische (dekorabhängige) Abweichung auf < 5 % reduziert werden, was zur Steigerung der Genauigkeit der Online-Messung führt. Dabei muss nicht jedes an der Anlage produzierte Dekor im PLS-Regressionsmodell erfasst werden. Für die NIR-Messung der Auftragsmenge auf den HDF-Platten mit unterschiedlichen Dekoren ist es ausreichend, aus wenigen Vertretern jeder Dekorgruppe ein Regressionsmodell zu entwickeln, das auf die gesamte Gruppe anwendet werden kann.

Die routinemäßige Überwachung der Auftragsmenge der flüssigen Harzschicht (Overlay) an der Fertigungsanlage kann je nach produziertem Dekor mit entsprechendem Gruppen-Modell erfolgen. Dazu werden die gebildeten Gruppen der Dekore um die restlichen Dekore, die bei der Kalibrierung nicht verwendet wurden, bezüglich ihrer Farbgebung erweitert.

Wie oben bereits angedeutet, kann die Harzschicht abriebfeste Partikel, Glaskugeln, natürliche und/oder synthetische Fasern und weitere Additive aufweisen.

Die zur Erhöhung der Verschleißfestigkeit verwendeten abriebfesten Partikel umfassen bevorzugt Korund (Aluminiumoxide), Borcarbide, Siliziumdioxide, Siliziumcarbide, wobei die Verwendung von Korund besonders bevorzugt ist. In einer Variante beträgt die

Menge an aufgestreuten abriebfesten Partikeln 10 bis 50 g/m², bevorzugt 10 bis 30 g/m², insbesondere bevorzugt 15 bis 25 g/m². So können z.B. 14 g/m² oder 23 g/m² an abriebfesten Partikel aufgestreut werden.

Die bevorzugt verwendeten Glaskugeln weisen einen Durchmesser von 50-100 µm, bevorzugt von 60-80 µm auf. Die Auftragsmenge der Glaskugeln, wenn diese zusammen mit der dritten Harzschicht aufgebracht werden, beträgt 1-5 g/m², bevorzugt 2-4 g/m², insbesondere bevorzugt 3 g/m².

Wie oben bereits angemerkt, werden die Referenzproben sowohl spektroskopisch als auch nicht-spektroskopisch vermessen bzw. bestimmt, um so die Parameter den aufgenommenen NIR-Spektren der Referenzproben zuzuordnen.

Je nach Parameter werden unterschiedliche nicht-spektroskopische Analysemethoden verwendet.

Menge der aufgetragenen Harzschicht:
Ein gängiges Verfahren zur Bestimmung von Auftragsmengen ist das Auswiegen. Dabei wird das Trägermaterial mit dem Beschichtungsmedium im Auftragsaggregat beschichtet und anschließend durch Bestimmung der Wiegedifferenz die Auftragsmenge bestimmt.

Feuchte der aufgetragenen Harzschicht:
Das Darrprobe-Verfahren ist die genaueste Methode zur Bestimmung der Feuchte (insbesondere der Holzfeuchte), wobei eine Probe bei 103+/-2°C für 24 Stunden in einem Trockenofen getrocknet wird. Die Feuchte ist definiert als das Verhältnis des Gewichts des im Material enthaltenen Wassers zum Gewicht des absolut trockenen Materials (Darrgewicht).
Die Feuchte ist demnach das Verhältnis zwischen Nassgewicht und Trockengewicht (Darrgewicht).

Aushärtungsgrad der aufgetragenen Harzschicht:
Die Aushärtung wird über den sogenannten Säuretest bestimmt. Dabei wird die Oberfläche für einen definierten Zeitraum mit einer verdünnten Mineralsäure (4 molare Salzsäure) beansprucht. Anschließend wird die Glanzgrad- und/oder Farbänderung beurteilt. Dabei ist die Aushärtung umso stärker je weniger Glanzgrad-/Farbverlust zu beobachten ist.

Vernetzungsgrad der aufgetragenen Harzschicht:
Die Bestimmung des Vernetzungsgrades von teilvernetzten Prekondensaten oder Polykondensaten (auch bekannt als teilvernetzter, noch teilweise löslicher B-Zustand) erfolgt über den VC-Test (Volatile Compound-Test), bei dem nicht nur Wasser sondern auch zu einem geringen Anteil Formaldehyd aus den Kunstharzen abgespalten wird. Für den VC-Test wird eine Probe (üblicherweise 10 × 10 cm) gewogen und 5 min bei 105°C getrocknet. Nach dem Abkühlen wird die Probe erneut gewogen. Danach wird ausgehen vom Endgewicht der Masseverlust bestimmt und als Prozentwert angegeben. Das zuvor bestimmte Papiergewicht dient als Basis für die Bestimmung des Harzauftrages in Prozent (( Endgewicht - Papiergewicht / Papiergewicht ) × 100).

Menge an aufgestreuten abriebfesten Partikeln:
Diese kann indirekt über die Abriebfestigkeit der aufgetragenen Harzschicht ermittelt werden. Die Abriebfestigkeit von ausgehärteten Schutzschichten z.B. auf Laminatböden ist gemäß DIN EN 13329:2017 (D) möglich. Hierbei wird die Widerstandsfähigkeit der Deckschicht bzw. Verschleißschicht gegen ein Durchscheuern geprüft. Es werden Proben (z.B. in der Größe 10 cm × 10 cm) aus der zu prüfenden Platte oder dem zu prüfenden Muster ausgeschnitten. Die Proben werden mit einem Stift in acht gleich große Segmente (Oktanten) eingeteilt. Diese Proben werden in eine Prüfvorrichtung eingespannt, an der sich zwei schwenkbare Arme mit beweglichen Reibrollen und ein Gewicht (500 g) befinden. Die Reibrollen sind mit normiertem Schleifpapier beklebt. Die eingespannten Proben rotieren unter den Reibrädern. Alle 200 Umdrehungen wird das Schleifpapier gewechselt und der Verschleiß der Oberfläche geprüft. Die Prüfung ist beendet, wenn in fünf Oktanten des Prüfkörpers der Untergrund (Druckbasispapier, Grundierung) in einer Größe von jeweils 1 mm² sichtbar ist. Die bis zur Freilegung des Dekors notwendige Anzahl an Umdrehungen wird als Ergebnis angegeben.

Das vorliegende Verfahren wird in einer Produktionslinie umfassend mindestens einen NIR-Multimesskopf, bevorzugt mindestens zwei NIR-Multimessköpfe, und mindestens ein Steuerungssystem durchgeführt. Eine solche Produktionslinie kann eine Produktionslinie zur Herstellung von Werkstoffplatten oder eine Imprägnieranlage für Papierlagen sein.

Das Steuerungssystem der Produktionslinie umfasst mindestens eine computergestützte Auswerteeinheit (bzw. Prozessoreinheit) und eine Datenbank. In der Auswerteeinheit erfolgt der Abgleich bzw. Vergleich des für das Produkt (d.h. Trägermaterial mit aufgetragener Harzschicht) gemessenen NIR-Spektrums mit den für die jeweils einzelnen Parameter erstellten Kalibriermodellen. Die so bestimmten Parameterdaten werden in der Datenbank gespeichert.

Die mit dem vorliegenden spektroskopischen Verfahren bestimmten Daten werden erfindungsgemäß zur

Steuerung der Produktionslinie verwendet. Die berührungslos gemessenen Parameterwerte des NIR-Multimesskopfes ("Ist-Werte") können, wie zuvor bereits beschrieben, direkt und in "real time" für die Steuerung bzw. Regelung der betreffenden Anlage verwendet werden, indem beispielsweise die gemessenen und in der Datenbank, z.B. einer relationalen Datenbank, Ist-Werte gespeichert und mit dort vorhandenen Soll-Werten dieser Parameter verglichen werden. Die sich ergebenden Differenzen werden anschließend zur Steuerung bzw. Regelung der Produktionslinie verwendet.

Für den Abgleich und die Steuerung der Produktionslinie wird ein computerimplementiertes Verfahren sowie ein Computerprogramm umfassend Befehle, die bei der Ausführung des Programms durch einen Computer diesen veranlassen das computerimplementierte Verfahren auszuführen, bereitgestellt. Das Computerprogramm ist in einer Speichereinheit des Steuerungssystems der Produktionslinie gespeichert.

Wie erwähnt, kann die Produktionslinie zur Beschichtung von Werkstoffplatten ausgelegt sein. In einer Ausführungsform kann eine solche Produktionslinie folgenden Aufbau aufweisen:
- mindestens eine erste Auftragsvorrichtung zum Auftragen einer ersten Harzschicht auf die Oberseite und/oder Unterseite der Werkstoffplatte,
- mindestens eine in Verarbeitungsrichtung hinter der ersten Auftragsvorrichtung angeordnete Vorrichtung zum Aufstreuen einer vorbestimmten Menge an abriebfesten Partikeln;
- mindestens eine in Verarbeitungsrichtung hinter der ersten Auftragsvorrichtung und Streuvorrichtung angeordnete erste Trocknungsvorrichtung zum Trocknen der ersten oberen und/oder unteren Harzschicht;
- mindestens ein in Verarbeitungsrichtung hinter der ersten Trocknungsvorrichtung angeordneter NIR-Messkopf, insbesondere ein NIR-Multimesskopf, zur online-Bestimmung von Parametern auf der Oberseite der Werkstoffplatte angeordneten Harzschicht;
- mindestens eine in Verarbeitungsrichtung hinter dem ersten NIR-Messkopf angeordnete zweite Auftragsvorrichtung zum Auftragen einer zweiten Harzschicht auf die Oberseite und/oder Unterseite der Werkstoffplatte,
- mindestens eine in Verarbeitungsrichtung hinter der zweiten Auftragsvorrichtung angeordnete zweite Trocknungsvorrichtung zum Trocknen der zweiten oberen und/oder unteren Harzschicht;
- mindestens ein in Verarbeitungsrichtung hinter der zweiten Trocknungsvorrichtung angeordneter zweiter NIR-Messkopf, insbesondere ein NIR-Multimesskopf, zur online-Bestimmung von Parametern auf der Oberseite der Werkstoffplatte angeordneten Harzschicht;
- mindestens eine in Verarbeitungsrichtung hinter dem zweiten NIR-Messkopf angeordnete dritte Auftragsvorrichtung zum Auftragen einer dritten Harzschicht auf die Oberseite und/oder Unterseite der Werkstoffplatte,
- mindestens eine in Verarbeitungsrichtung hinter der dritten Auftragsvorrichtung angeordnete dritte Trocknungsvorrichtung zum Trocknen der dritten oberen und/oder unteren Harzschicht; und
- mindestens eine Pressvorrichtung, insbesondere eine Kurztaktpresse, zum Verpressen des Schichtaufbaus.

In einer bevorzugten Ausführungsform umfasst die Produktionslinie zur Durchführung des vorliegenden Verfahrens
- mindestens eine in Verarbeitungsrichtung hinter der zweiten Trocknungsvorrichtung angeordnete dritte Auftragsvorrichtung zum Auftragen einer dritten Harzschicht auf die Oberseite,
- mindestens eine in Verarbeitungsrichtung hinter der dritten Auftragsvorrichtung angeordnete Vorrichtung zum Aufstreuen einer vorbestimmten Menge an Glaskugeln;
- mindestens eine in Verarbeitungsrichtung hinter der dritten Auftragsvorrichtung und der Streuvorrichtung für die Glaskugeln angeordnete Trocknungsvorrichtung zum Trocknen der dritten oberen und unteren Harzschicht;
- mindestens ein in Verarbeitungsrichtung hinter der Trocknungsvorrichtung angeordneter zweiter NIR-Messkopf, insbesondere ein NIR-Multimesskopf, zur online-Bestimmung von Parametern auf der Oberseite der Werkstoffplatte angeordneten Harzschicht;
- mindestens eine in Verarbeitungsrichtung hinter dem zweiten NIR-Messkopf angeordnete vierte Auftragsvorrichtung zum Auftragen einer vierten Harzschicht auf die Oberseite und/oder Unterseite der Werkstoffplatte,
- mindestens eine in Verarbeitungsrichtung hinter der vierten Auftragsvorrichtung angeordnete vierte Trocknungsvorrichtung zum Trocknen der vierten oberen und unteren Harzschicht; und
- mindestens eine in Verarbeitungsrichtung hinter der vierten Trocknungsvorrichtung angeordnete Kurztaktpresse.

Es ist generell möglich, dass in der Produktionslinie weitere NIR-Messköpfe vorgesehen sind. So kann nach jeder Auftrags- und Trocknungsvorrichtung ein NIR-Messkopf vorgesehen sein. So kann z.B. nach Auftrag und Trocknung der letzten Harzschicht vor dem Verpressen ein weiterer NIR-Messkopf in der Produktionslinie vorgesehen sein.

Auch ist es möglich, dass zusätzlich die Parameter der auf der Unterseite der Werkstoffplatte aufgetragenen Harzschicht bestimmt werden. In diesem Fall wäre ein oder wären mehrere NIR-Messköpfe zusätzlich unterhalb der vorbeigeführten Werkstoffplatte in der Produktionslinie vorgesehen, so dass die Unterseite der Werkstoffplatten angestrahlt wird.

Die zum Einsatz kommenden Auftragsvorrichtungen sind bevorzugt Auftragswalzen, die ein Auftragen der Schichten auf die Oberseite bzw. die Unterseite der Trägerplatte ermöglichen. Bevorzugt erfolgt ein paralleles Auftragen von Verschleißschicht auf die Oberseite und Harzschicht auf die Unterseite der Holzwerkstoffträgerplatte.

Je nach Anforderung der Fertigungslinie ist es selbstverständlich möglich, die Anzahl der Auftragsvorrichtungen und Trocknungsvorrichtungen zu variieren. So kann z.B. im Anschluss an die KT-Presse ein Kühlwender zum Abkühlen der ausgehärteten Holzwerkstoffplatten vorgesehen sein.

Wie erwähnt, kann die Produktionslinie als Imprägnieranlage für Papierlagen ausgebildet sein. Eine solche Imprägnieranlage umfasst mindestens eine Imprägnierwanne bzw. ein Imprägniertauchbad, ggfs. eine Atemstrecke, ein Rakelsystem / Quetschwalzenpaar zur Entfernung von überschüssigem Harz, optional eine Vorrichtung zum Streuen von abriebfesten Partikeln, mindestens einen Trockner (z.B. ein Schwebetrockner), optional ein Rasterwerk und ein optional zweiter Trockner, mindestens eine Abkühlvorrichtung (z.B. ein Kühlwalzsystem) und mindestens ein in Verarbeitungsrichtung nach der Abkühlvorrichtung angeordneter NIR-Messkopf, bevorzugt ein NIR-Multimesskopf. Der NIR-Messkopf ist bevozugt so angeordnet, dass die Oberseite der imprägnierten Papierlage bestrahlt wird. Generell ist es aber auch möglich weitere NIR-Messköpfe in der Imprägnieranlage zur Vermessung der Oberseite und Unterseite der imprägnierten Papierlage vorzusehen.

In beiden Ausführungsformen der Produktionslinien (Holzwerkstoffplatte, Imprägnat) sind die NIR-Messköpfe jeweils mit einem Steuerungssystem mit Auswerteeinheit und Datenbank zur Prozessierung und Speicherung der ermittelten NIR-Daten an verbunden. Bei Abweichungen der gemessenen Ist-Werte von den Soll-Werten erfolgt eine automatische Anpassung durch die Anlagensteuerung bzw. -regelung. Grundsätzlich liefern alle in einer Produktionslinie verwendeten NIR-Messköpfe die von ihnen gemessenen Istwerte an die zentrale steuer- und Auswerte-Einheit liefern, die bei Abweichung der gemessenen Ist-Werte z.B. eines einzigen der NIR-Messköpfe von den entsprechenden Sollvorgaben den Produktionsablauf entsprechend regelt oder vorausschauend steuert.

Im Falle der Impägnieranlage werden z.B. bei Abweichungen der gemessenen Ist-Werte der Parameter von den Sollvorgaben durch eine automatische Steuerung oder Regelung die Rakel/die Quetschwalzen, die Streumenge und/oder die Temperaturführung im Trockner geändert.

Im Falle der Produktionslinie zur Herstellung von Holzwerkstoffplatten erfolgt bei Abweichungen der gemessenen Istwerte der Parameter von den Sollwerten eine automatische Anpassung durch die Anlagensteuerung bzw. -regelung.

Die mit dem vorliegenden Verfahren bestimmten Parameter können neben der unmittelbaren Steuerung einer Anlage in vielfältiger Weise auch für andere Anwendungen eingesetzt werden.

### Einsatz von Al-Systemen zur Auswertung der Messdaten, zur Steuerung und Regelung der Anlage und zur Qualitätskontrolle der auf der Anlage hergestellten Produkte:

Zur Auswertung der gemessenen und in der Datenbank abgespeicherten Parameterwerte des jeweiligen NIR-Multimesskopfes werden bei der Erfindung ferner vorteilhaft Methoden bzw. Systeme der künstlichen Intelligenz ("artificial intelligence" oder kurz "AI") eingesetzt, die sich insbesondere dadurch auszeichnen, dass diese System durch den kontinuierlichen Zufluss von Messdaten und dem damit verbundenen kontinuierlichen Anwachsen der gespeicherten Datenmenge der gemessenen Parameterwerte des oder der NIR-Multimessköpfe der Anlage in ihrer Auswertung dieser Daten im Laufe der Zeit in ihrer Auswertung dieser Daten immer besser werden ("wissensbasierte Al-Systeme im engeren Sinn") und die ggf. auch bislang unbekannte Korrelationen zwischen den einzelnen Messparametern des NIR-Messverfahrens (und ggf. zwischen diesen "NIR"-Messdaten und weiteren Daten, die anderweitig gewonnen und dem Al-System zur Auswertung zur Verfügung gestellt wurden) erkennen und auswerten können ("selbstlernende" Al-basierte Auswertesysteme) und die diese neuen Erkenntnisse zur weiteren Optimierung der Steuerung bzw. Regelung der Anlage einsetzen können, um dadurch das Anfahren und den Betrieb der Anlage hinsichtlich Effizienz und Ausfallssicherheit weiter zu optimieren bzw. die Qualität der auf dieser Anlage hergestellten Produkte weiter erhöhen zu können bzw. den Ausschuss (fehlerbehaftete oder qualitätsmäßig minderwertigere Produkte) weiter reduzieren zu können.

### Einsatz von Al-Systemen zur Vorhersage von Ausfallwahrscheinlichkeiten von Komponenten der Anlage bzw. zu Qualitätsminderungs-Wahrscheinlichkeiten der auf der Anlage hergestellten Produkte:

Ferner können mit solchen Al-basierten Auswertesystemen auch Vorhersagen über die zukünftige Entwicklung der zu messenden Parameterwerte und damit Aussagen über die Entwicklung der Qualität der Produkte bzw. den Verschleiß einzelner Komponenten der Anlage gemacht werden, die unter anderem dazu genutzt werden können, eventuelle Wartungsarbeiten oder Reparaturen "vorausschauend" zu planen bzw. vorzunehmen, bevor beispielsweise eine Komponente aufgrund des Verschleißes tatsächlich ausfällt oder bevor sich die Qualität der Produkte tatsächlich soweit verschlechtert hat, dass sie als Ausschuss nicht mehr verkauft werden können.

### Einsatz des Messverfahrens, insbesondere unter Verwendung von Al-Systemen, zur Optimierung des Anfahrprozesses einer Anlage:

Die zu bestimmten Produkttypen abgespeicherten Ist-Werte der Parameter, die mit dem vorliegenden NIR-Messverfahren zu einem bestimmten Produkttyp auf einer bestimmten Anlage bereits gemessen wurden, und den zugehörigen Sollwerten dieser Parameter, können vorteilhaft beim Anfahren der Produktion des bereits bekannten Produkttyps auf dieser Anlage verwendet werden, um durch Vergleich der neu gemessenen Messwerte dieser Parameter mit diesen bereits vorhandenen Datensätzen dieser Parameter und der Auswertung der sich ergebenden Differenzen in diesen Werten die Parameter dieser Anlage schneller für die Produktion des besagten Produkttyps einzustellen und zu optimieren.

Diese zeitliche Verkürzung des Anfahrens der Anlage wird vorteilhaft durch den Einsatz der zuvor bereits genannten Al-basierten System weiter verbessert, da hier besonders schnell auch auf Änderungen der Ausgangsbasis zur Produktion eines bestimmten Produkttyps auf der Anlage reagiert werden kann, wenn z.B. zur Herstellung des besagten Produkttyps andere Rohmaterialien als die bisher verwendeten Rohmaterialien verwendet werden (z.B. das Holzfasergemisch, dessen Zusammensetzung sich signifikant ändern kann, wenn unterschiedliche Fraktionen von unterschiedlichen Holzarten (Pappel, Kiefer, Tanne, Buche, etc. und/oder auch recyceltes Altholz) verwendet werden, oder die verwendeten Kunstharz/Additiv-Gemische, deren einzelnen Chargen von Hersteller zu Hersteller variieren können bzw. deren Rezepturen sich geändert haben können).

Diese Verkürzung des Anfahrens einer Anlage wirkt sich insbesondere dann sehr vorteilhaft aus, wenn die Anlage nach einer Reparatur oder nach einer Regelwartung oder nach einer Probenentnahme, bei die Anlage angehalten werden muss, wieder angefahren wird bzw. vor Allem wenn eine Reihe kleinerer Chargen von bestimmten (unterschiedlichen) Produkttypen hergestellt werden sollen.

Dies kann sich vor Allem dann positiv auswirken, wenn der Anlagenbetreiber mit seinen Anlagen infolge eines geänderten Konsumverhaltens der Endverbraucher bzw. des Bestellverhaltens der kommerziellen Kunden eines Anlagenbetreibers mehr und mehr solche kleineren Chargen von unterschiedlichen Produkttypen nacheinander herstellen muss und entsprechend viele damit verbundenen Ausfallzeiten seiner Anlage (Stand- und Anfahrzeiten) zu bewältigen hat.

Mit der hier beschriebenen Ausprägung der Erfindung können diese notwendigen, aber unerwünschten Ausfallzeiten der Anlage deutlich reduziert werden, mit der Folge, dass auch das Herstellen einer Reihe von kleinerer Chargen von unterschiedlichen Produkttypen sich für den Anlagenbetreiber wirtschaftlich rechnen kann.

### Industrie 4.0: Vernetzung einer Anlage mit einem Pool weiterer Anlagen des gleichen Typs oder eines ähnlichen Typs:

Die zuvor beschriebenen Anlagen können in einer weiteren Ausbaustufe über Kabel oder, vorteilhafter, über das Internet bzw. die Telekommunikationsnetze, mit anderen Anlagen des gleichen oder eines ähnlichen Typs des Anlagenbetreibers vernetzt werden, die sich beispielsweise auf dem Gelände derselben Betriebsstätte befinden und/oder auch an anderen Betriebsstätten des Anlagenbetreibers, die sich an anderen Orten im In- und Ausland befinden können.

Möglich ist auch, diese eine Anlage des Anlagenbetreibers oder auch alle anderen Anlagen (oder zumindest einige dieser Anlagen) vom gleichen Typ oder ähnlichen Typ des Betreibers mit Anlagen vom gleichen Typ oder ähnlichem Typ zu vernetzen, die anderen Anlagenbetreibern gehören.

Grundidee ist hierbei, die Messdaten aller angeschlossenen Anlagen entweder in einer zentralen (serverbasierten) Auswertungseinheit zusammenzuführen, die diese Daten aller angeschlossenen Anlagen auswertet und infolge der größeren zur Verfügung stehenden Datenmenge eine noch bessere und schnellere Auswertung der Daten vornehmen kann und dadurch die in den Kapiteln zuvor beschriebenen Prozesse noch effizienter (schneller, besser, mit höherer Qualität, mit zuverlässigeren Vorhersagen, usw.) gestalten kann. Dies wird sich insbesondere dann auszahlen, wenn hierfür Al-basierte Auswertungs-Systeme zum Einsatz kommen. Anstelle einer zentralen (serverbasierten) Auswertungseinheit können auch verteilte dezentrale Auswertungseinheiten eingesetzt werden, die untereinander kommunizieren und auf die Daten aller oder ausgewählter Anlagen zugreifen können/dürfen.

Auch die Einspeisung und Speicherung der Messdaten der einzelnen Anlagen in einer Cloud-Anwendung ist möglich, auf die
- die einzelnen Auswertungseinheiten für einzelne Anlagen ("lokale" anlagenspezifische Auswertungseinheit/Anlage) zugreifen können/dürfen und/oder
- dezentrale Auswertungseinheiten für alle oder einige Anlagen jeweils eines Anlagenbetreibers ("Kohortenspezifische" anlagenbetreiberspezifische Auswertungseinheit/Anlagenbetreiber") und/oder
- eine zentrale Auswertungseinheit, die an Hand aller in der Cloud verfügbaren Daten von den Anlagen aller Anlagenbetreiber die Auswertung der individuellen Daten einer spezifischen Anlage eines Anlagenbetreibers auswertet und die Ergebnisse der Steuer- oder Regeleinheit dieser spezifischen Anlage mitteilt ("zentrale" anlagenbetreiberunabhängige Auswertungseinheit).

Die Grundidee des Modells einer anlagenübergreifenden und ggf. Al-basierten Speichereinheit der Messdaten (IST-Werte) der herzustellenden Produkte und der zugehörigen Muster- oder Vorgabe-daten/Spezifikationen (Soll-Werte) zu diesen Produkten besteht also darin, all diese Daten zentral für alle angeschlossenen Anlagen bzw. NIR-Multimessköpfe (bevorzugt unter Wahrung der Vertraulichkeit der Daten von Anlagen bzw. NIR-Multimessköpfen von verschiedenen (juristisch nicht miteinander verbundenen Anlagenbetreibern) zentral zu speichern und die Auswertung einkommender IST-Daten einer Anlage für diese an Hand der relevanten gespeicherten Daten aller relevanten Anlagen auszuwerten und die Ergebnisse dieser Auswertung an die Steuerung oder Regelung der individuellen Anlage oder an die Qualitätskontrolle für diese Anlage zurück zu senden. Dies kann eine bemannte Zentrale für die Steuerung bzw. Regelung der Anlage und/oder die Qualitätskontrolle der auf der Anlage hergestellten Produkte sein. Es kann aber auch eine automatisierte oder zumindest teilautomatisierte Zentrale sein, die entweder ganz oder zumindest teilweise ohne menschliches Zutun die Anlage steuert oder regelt und/oder die die Qualität der Produkte entweder automatisiert oder zumindest teilautomatisiert überwacht und bei Verschlechterungen der Qualität der hergestellten Produkte automatisiert oder teilautomatisiert in die Steuerung oder Regelung der Anlage eingreift oder zumindest ein Warnsignal auslöst.

Diese Auswertungseinheit oder -einheiten können physikalisch separate (z.B. serverbasierte) Einheiten sein, sie können aber auch virtuelle Einheiten sein, die ebenfalls in der Cloud gespeichert sind und z.B. vom Cloud-Betreiber entwickelt, gewartet und aktualisiert werden.

Mit Hilfe von Firewalls und ähnlichen Einrichtungen kann sichergestellt werden, das die Auswertung anhand der eingespeisten Daten aller angeschlossenen Anlagen (oder zumindest eines Teils davon) von der Auswertungseinheit oder den Auswertungseinheiten durchgeführt werden, dass die einzelnen Anlagenbetreiber aber nur Zugang zu den Auswertungsergebnissen bekommt, die ihre eigenen Anlagen (und nur die) betreffen, damit die Vertraulichkeit der empfangenen Messdaten und der Ergebnisse der Auswertungen gewährt ist.

Möglich ist auch, dass sich z.B. die Bertreiber solcher Anlagen zusammentun und gemeinsam eine solche Speicher- und Auswertungseinheit z.B. in Form eines Servers oder einer "Privat-Cloud" betreiben oder von einem neutralen externen Dienstleister in deren Auftrag betreiben lassen, der z.B. der Hersteller solcher NIR-Multimessköpfe sein könnte.

Ferner ist gemäß der Erfindung möglich, dass nicht nur die Messdaten zentral auf einem Server oder in einer Cloud gespeichert werden können und ggf. auch die Auswertungseinheit, sondern dass auch die Steuerung und Regelung der einzelnen Anlagen von diesem zentralen Server oder dieser Cloud aus direkt gesteuert oder geregelt werden bzw. die Kontrolle der Qualität der auf diesen Anlagen hergestellten Produkte zentral überwacht wird bzw. zentral und vorbeugend die Anlagenbetreiber über Vorhersagen zu Wahrscheinlichkeiten von zukünftigen Wartungen und Reparaturen der einzelnen Anlagen und ihrer Komponenten und zu zukünftigen Qualitätsverschlechterungen informiert werden.

Besonders vorteilhaft könnte eine solche zentrale, ggf. Al-basierte Plattform für die Speicherung, Auswertung, Überwachung, Prädiktion und ggf. sogar Steuerung und Regelung und Qualitätskontrolle solcher NIR-Multimessköpfe oder der damit verbundenen Anlagen vom Hersteller der NIR-Multimessköpfe betrieben werden und als Dienstleistung den Anlagenbetreibern angeboten werden.

Alternativ hierzu könnte ein solcher Hersteller von NIR-Multimessköpfen zumindest ein solches netzfähiges und ggf. Al-basiertes Gesamtsystem zum Betrieb der NIR-Multimessköpfe der Anlagen eines Anlagenbetreibers anbieten, das Speicherung, Auswertung, Überwachung, Prädiktion und ggf. sogar Steuerung und Regelung und Qualitätskontrolle solcher NIR-Multimessköpfe oder der damit verbundenen Anlagen des Anlagenbetreibers ermöglicht.

Natürlich können die hier beschriebenen vernetzten und ggf. Al-basierten Systeme zur Speicherung, Auswertung, Überwachung, Prädiktion und ggf. sogar Steuerung und Regelung und Qualitätskontrolle solcher NIR-Multimessköpfe oder der damit verbundenen Anlagen auch mit anderen Systemen dieser Art kombiniert oder in diese integriert werden, die andere Parameter erfassen und auswerten, oder diese anderen Systeme integrieren.

Solche Systeme können z.B. spezielle Systeme für die Bearbeitung des Auftragseingangs, für Auftragsabarbeitung (Produktionsplanung) und Auslieferung der bestellten/hergestellten Produkte sein, oder die Logistik-Systeme des Materialeinkaufs bzw. Warenauslieferung oder aber die in modernen Unternehmen bereits vorhandenen ERP-Systeme (ERP = "Enterprise Resourcen Planning").

Die Erfindung wird nachfolgend unter Bezugnahme auf die Figuren der Zeichnung an einem Ausführungsbeispiel näher erläutert. Es zeigen:
- Figur 1: eine schematische Darstellung einer Produktionslinie für die Herstellung einer Holzwerkstoffplatte; und
- Figur 2: eine schematische Darstellung einer Imprägnieranlage.

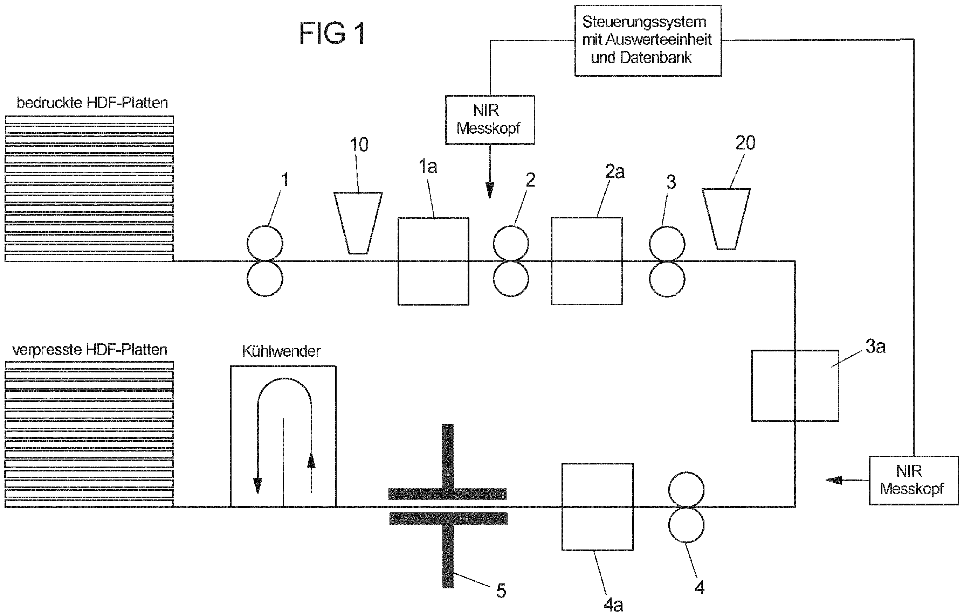

Die in der Figur 1 schematisch dargestellte Produktionslinie umfasst vier Doppelauftragsaggregate 1, 2, 3, 4 zum gleichzeitigen Auftrag der jeweiligen Harzschicht auf die Oberseite und die Unterseite der vereinzelten bedruckten Werkstoffplatten z.B. von bedruckten HDF-Platten sowie jeweils vier in Verarbeitungsrichtung hinter den Doppelauftragsaggregaten angeordnete Konvektionstrockner 1a, 2a, 3a, 4a.

Nach der ersten Auftragswalze 1 ist zudem eine erste Streuvorrichtung 10 zum gleichmäßigen Aufstreuen des abriebfesten Materials wie z.B. Korund auf die erste Harzschicht auf der Oberseite der HDF-Platte vorgesehen. Die Trocknung der ersten Harzschicht erfolgt anschließend in dem ersten Konvektionstrockner 1a. Nach dem ersten Konvektionstrockner 1a ist ein erster NIR-Multimesskopf vorgesehen.

Es schließen sich ein zweites Doppelauftragswerk 2 zum Auftragen einer zweiten Harzschicht und ein zweiter Konvektionstrockner 2a zum Trocknet der zweiten Harzschicht an.

Dem dritten Doppelauftragswerk 3 zum Auftrag der dritten Harzschicht kann eine weitere Streuvorrichtung 20 zum Auftrag von Glaskugeln auf die dritte Harzschicht nachgeordnet sein gefolgt von einem dritten Konvektionstrockner 3a zum Trocknen der dritten Harzschicht. Die Streuvorrichtung 20 für die Glaskugeln ist optional. Die Glaskugeln können auch zusammen mit der dritten Harzschicht aufgetragen werden. Nach dem dritten Konvektionstrockner 3a ist ein zweiter NIR-Multimesskopf vorgesehen.

Nach Auftragen der vierten Harzschicht, die im Falle der vierten Harzschicht auf der Oberseite z.B. Zellulosefasern enthalten kann, in einem vierten Doppelauftragswerk 4 und Trocknen in einem vierten Konvektionstrockner 4a wird der Schichtaufbau in einer Kurztaktpresse 5 verpresst. Die verpressten Platten werden gekühlt und gelagert.

Es ist generell möglich, dass in der Produktionslinie weitere NIR-Messköpfe vorgesehen sind. So kann z.B. nach Auftrag und Trocknung der letzten Harzschicht vor dem Verpressen ein weiterer NIR-Messkopf in der Produktionslinie vorgesehen sein (nicht gezeigt). Auch ist es möglich, dass zusätzlich ein oder mehrere NIR-Messköpfe unterhalb der vorbeigeführten Werkstoffplatte in der Produktionslinie vorgesehen sind, so dass die Unterseite der Werkstoffplatten angestrahlt wird (nicht gezeigt).

Der beiden NIR-Multimessköpfe sind mit einem Steuerungssystem mit Auswerteeinheit und Datenbank zur Prozessierung und Speicherung der ermittelten NIR-Daten verbunden. Bei Abweichungen von den Sollwerten erfolgt eine automatische Anpassung der Produktionsbedingungen durch die Anlagensteuerung bzw. -regelung.

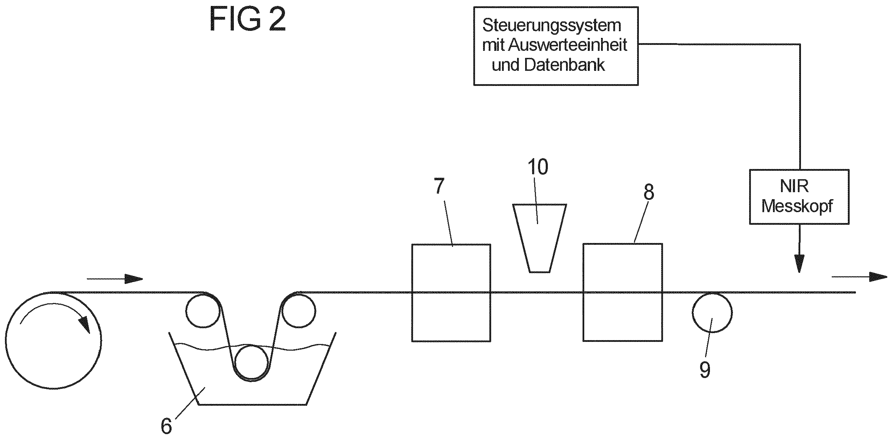

Figur 2 zeigt den schematischen Aufbau einer Imprägnieranlge für Papierlagen. Diese umfasst mindestens eine Imprägnierwanne bzw. ein Imprägniertauchbad 6, ein Rakelsystem bzw. Quetschwalzenpaar 7 zur Entfernung von überschüssigem Harz, eine Vorrichtung zum Streuen von abriebfesten Partikeln 10, einen Schwebetrockner 8, ein Kühlwalzsystem 9 und einen in Verarbeitungsrichtung nach der Abkühlvorrichtung angeordneten NIR-Multimesskopf. Generell ist es auch möglich weitere NIR-Messköpfe in der Imprägnieranlage zur Vermessung der Oberseite und Unterseite der imprägnierten Papierlage vorzusehen (nicht gezeigt).

Der NIR-Multimesskopf ist auch hier mit einem Steuerungssystem mit Auswerteeinheit und Datenbank zur Prozessierung und Speicherung der ermittelten NIR-Daten verbunden. Bei Abweichungen von den Sollwerten erfolgt eine automatische Anpassung der Produktionsbedingungen durch die Anlagensteuerung bzw. -regelung

### Beispiel 1: Bestimmen der Menge der auf einer mit einem Dekor versehenen Holzwerkstoffplatte aufgetragenen Harzschicht

Erstellen einer Referenzprobe und Kalibrierung:
Die Kalibrierung des NIR-Messsystem für die On-Line-Bestimmung der Auftragsmenge wird wie folgt durchgeführt.

Aus einer HDF-Platte werden mehrere 50 cm × 50 cm Proben angefertigt. Die Rückseite und Kanten der Proben werden mit Aluminiumklebeband versiegelt, um den Feuchteverlust beim Trocknen zu hindern. Eine Probe wird mittels einer Auftragswalze mit einer Harzlösung von oben beschichtet. Die Bestimmung der Auftragsmenge erfolgt durch Auswiegen vor und nach dem Beschichten der Proben. Danach wird die Probe in einem Konvektionstrockner bei ca. 190 °C ca. 15 Sekunden getrocknet und anschließend mit dem NIR-Spektrometer vermessen. Das Vermessen der Kalibrierproben erfolgt mit dem NIR-Messsystem DA 7400. Die Messung wird manuell gestartet und dauert ca. 10 s. Dabei werden die Referenzplatten per Hand kreisförmig unter dem Messkopf bewegt. Durch die Variation der Auftragsmenge wird eine Kalibrierung über einen weiten Bereich der Auftragsmenge von 30 g/m² bis 145 g/m² erreicht. Auf diese Weise werden mehrere Referenzproben vermessen.

Aus den Referenzspektren wird ein Kalibriermodell erstellt, welches zur Bestimmung der Auftragsmenge einer unbekannteren Probe genutzt wird. Die Erstellung des Kalibriermodells erfolgt mittels multivariater Datenanalyse. Dies geschieht mit geeigneten Analysesoftware z. B. mit der bereits zuvor erwähnten Analysesoftware The Unscrambler der Firma CAMO.

Zur Erstellung des Kalibriermodells werden spektrale Daten aus dem NIR Spektralbereich des flüssigen Harzes zwischen 1450 und 1550 nm verwendet, die zunächst mittels geeigneter mathematischer Methoden vorbehandelt werden und anschließend der multivariaten Datenanalyse zugeführt werden.

Das verwendete Software-Programm ermöglicht durch speziellen Vorbehandlungstechniken der spektralen Daten verschiedene Störfaktoren auf die Messung wie Oberflächenbeschaffenheit der Proben, infrarot-inaktive Füllstoffe in der Beschichtung oder unterschiedlichen Farben der Proben und weitere, zu minimieren.

Der Farbeinfluss im Falle der Bestimmung der Flüssigharzmenge auf Dekorschichten auf die NIR-Messung kann zusätzlich durch die Bildung von Dekorgruppen, die eine ähnliche Farbeinteilung aufweisen, gelöst werden. Dazu werden alle bei der Kalibrierung verwendeten Dekore in drei Gruppen ihrem Farbton entsprechend aufgeteilt. Die Gruppe 1 beinhaltet helle und die Gruppe 2 mittlere Dekore. In der Gruppe 3 werden Kalibrierproben der dunklen Dekore zusammengefasst. Durch die Aufteilung des gesamten Modells in drei Gruppen-Modelle nach der Farbe der produzierten Dekore wird die systematische (dekorabhängige) Abweichung auf < 5 % reduziert, was zur Steigerung der Genauigkeit der Online-Messung führt. Dabei muss nicht jedes an der Anlage produzierte Dekor im PLS-Modell erfasst werden. Für die NIR-Messung der Auftragsmenge des Harz auf den HDF-Platten mit unterschiedlichen Dekoren ist es ausreichend, aus wenigen Vertretern jeder Dekorgruppe ein PLS-Regressionsmodell zu entwickeln, das auf die gesamte Gruppe anwendet werden kann.

Bestimmen der Auftragsmenge des flüssigen Harzes auf einer Dekorschicht:
Die Kalibrierung erfolgt durch Aufnahme der NIR-Spektren von mehreren, mit unterschiedlichen Dekoren bedruckten Referenzproben (Wiegeplatten 50 cm × 50 cm) mit bekannter Harzmenge. Dabei werden die Proben mittels einer Auftragswalze mit einer Harzlösung (Auftragsmenge zwischen 10 g/m² und 150 g/m²) von oben beschichtet. Aus den gewonnen Kalibrierspektren werden für jede Dekorgruppe ein PLS-Regressionsmodell erstellt, welches dann für die On-line Messung an der Anlage verwendet wird.

Für die On-Line Messung der Auftragsmenge im Prozess werden Modelle für jede DekorGruppe im NIR-Messsystem installiert.

### Beispiel 2: Bestimmen der Feuchte der auf einer Holzwerkstoffplatte aufgetragenen Harzschicht

Auf Holzwerkstoffplatten werden Melamin-Formaldehyd-Harzschichten aufgetragen. Diese dienen als Referenzproben. Anschließend werden NIR-Spektren in einem Wellenlängenbereich zwischen 900 und 1700 nm aufgenommen. Für die Aufnahmen der NIR-Spektren wird z.B. ein NIR-Messgerät der Fa. Perten verwendet. Der Messkopf trägt die Bezeichnung DA 7400.

Zur weiteren Auswertung der NIR-Spektren werden geeignete Kalibrationsmodelle erstellt. So wird ein erstes Kalibrationsmodell für die NIR-Spektren der Referenzproben (ohne Darrprobe) erstellt, welches unter Verwendung der Partial Least Squares (PLS) Regression ermittelt wurde.

Dieses Modell wird zur Bestimmung der Restfeuchte in der Darrprobe genutzt. Unter Anwendung des ersten Kalibrationsmodells wird z.B. von dem bereits zuvor bereits erwähnten Analyseprogramm SIMCA-P der Fa. Umetrics AB ein Feuchtegehalt für die Darrprobe berechnet. Dazu wird die Partial Least Square (PLS) Regression zur Erstellung einer Kalibrierfunktion benutzt, die eine Abhängigkeit zwischen Spektrum und Feuchtegehalt beschreibt. Für den Feuchtegehalt der Darrprobe wird von dem Analyseprogramm unter Anwendung der erstellten Kalibrierfunktion ein Feuchtegehalt berechnet.

Anschließend wird der Betrag des Feuchtegehaltes für die Darrprobe zu allen verwendeten Feuchtewerten der Kalibrierproben bzw. Referenzproben addiert und der Feuchtegehalt der Darrprobe gleich Null gesetzt. Aus diesen neuen Kalibrierwerten der Feuchte und den gemessenen Spektren wird mit Hilfe der Partial Least Squares (PLS) Regression ein zweites Kalibrationsmodell erstellt, welches nunmehr geeignet ist, eine Beziehung zwischen den gemessenen NIR-Spektren einer zu vermessenden Harzschicht auf einer Trägerplatte und den NIR-Spektren von Referenzproben mit bekannten Feuchtegehalt zu erstellen.

Unter Heranziehung des zweiten PLS-Kalibrationsmodels der linearen Regression wird anschließend das für eine Probe ermittelte NIR-Spektrum einem bestimmten Feuchtegehalt zugeordnet.

### Beispiel 3: Bestimmen des Aushärtungsgrades der auf einer Holzwerkstoffplatte aufgetragenen Harzschicht

Erstellen einer Referenzprobe und Kalibrierung: Die Kalibrierung erfolgt durch Aufnahme eines NIR-Spektrums von einer ausgehärteten Probe, die anschließend auf die Aushärtung mittels Säuretests geprüft wird, und wie folgt durchgeführt wird.

Mit verschiedenen Dekoren bedruckten HDF-Platten (207 cm × 280 cm) werden an der Beschichtungsanlage mittels Auftragswalze von oben mit flüssigem Melamin-Formaldehyd(MF) Harz oder mit einem mit MF-Harz imprägniertem Overlay-Papier beschichtet und anschließend in einer Kurztaktpresse bei 190-210°C und ca. 40 bar 8 bis 36 Sekunden lang gepresst. Dabei wird die Schutzschicht ausgehärtet. Durch die Variation der Presszeit und Presstemperatur werden Proben mit unterschiedlich ausgehärteten Schutzschichten erreicht.

Bei der Kalibrierung für eine online-Messung erfolgt die Aufnahme der NIR Spektren wenige Sekunden nach dem Pressvorgang direkt an der Produktionslinie. Anschließend wird die Platte an den Stellen, wo die NIR-Spektren aufgenommen wurden, mittels Säuretest auf die Aushärtung geprüft. Aus den Ergebnissen des Säuretest für eine Platte wird ein Mittelwert gebildet und dem Spektrum dieser Platte zugeordnet.

Auf dieser Weise werden mehrere Referenzspektren von unterschiedlich ausgehärteten Platten mit verschiedenen Farbdekoren (für Kalibrierung der online-Messung) aufgenommen. Der Säuretest wird wie folgt durchgeführt. Auf eine auf Zimmertemperatur abgekühlte Platte werden drei Tropfen 4 M HCl gegeben. Nach 25 Minuten Einwirkzeit wird die Säure mit Wasser abgespült. Anhand der optischen und haptischen Beurteilung der Oberfläche an der Einwirkstelle wird eine Aussage über die Qualität der Aushärtung getroffen.

Zur Kalibrierung wird das Ergebnis des Tests in Korrelation mit spektralen Daten gebracht. Die Erstellung des Kalibrationsmodells erfolgt mittels multivariate Datenanalyse. Dies geschieht mit einer geeigneten Analysesoftware z. B. mit The Unscrambler der Firma CAMO. Dieses Programm ermöglicht unter anderem durch speziellen Vorbehandlungstechniken der spektralen Daten verschiedenen Störfaktoren auf die Messung solche wie Oberflächenbeschaffenheit der Proben, Infrarot-inaktive Füllstoffe in der Beschichtung oder unterschiedlichen Farben der Proben und weitere, zu minimieren. Der Farbeinfluss auf die NIR-Messung kann, wie bereits zuvor beschrieben, zusätzlich durch die Bildung von Dekorgruppen, die eine ähnliche Farbeinteilung aufweisen, gelöst werden.

Aus den Referenzspektren wird ein Kalibrationsmodell erstellt, welches zu Ermittlung (Vorhersage) der Aushärtung einer unbekannten Probe genutzt werden kann.

Bei der Onine NIR-Messung wird dann direkt das Ergebnis des Säuretests bzw. Qualität der Aushärtung vorhergesagt.

Online-Messung des Aushärtungsgrades einer Harzbeschichtung:
Bei der Onine-Bestimmung der Aushärtung erfolgt die NIR-Messung bzw. Aufnahme der NIR-Spektren direkt an der Produktionsanlage, gleich nach der Aushärtung der Harzbeschichtung. Nach dem Erstellen eines Kalibrationsmodell wird dieses in dem Messgerät installiert. Beim Durchfahren der Proben unter dem Messkopf werden mehrere NIR-Spektren von der Beschichtung aufgenommen. Mit dem Kalibrationsmodell wird aus den aufgenommenen Spektren eine mittlere Aushärtung (Säure-Test) der Beschichtung berechnet. Auf diese Art wird jede Platte auf die Qualität der Aushärtung während der Produktion untersucht.

### Beispiel 4: Bestimmen des Vernetzungsgrades von Imprägnaten

Erstellen einer Referenzprobe und Kalibrierung:
Im Falle von imprägnierten Papieren werden für die die Kalibrierung der NIR-Messung zunächst Imprägnate in verschiedenen Trocknungszuständen mit dem NIR-Messkopf vermessen. Dazu werden Imprägnate aus einem Imprägnierkanal entnommen, die bei verschiedenen Geschwindigkeiten produziert werden. Dabei werden die Geschwindigkeiten des Imprägnierkanals um das an sich bekannte Optimum nach oben und unten variiert. Dann werden die Proben per NIR-Messkopf vermessen und dann im Ofen der VC-Wert bestimmt.
Nach fünf Minuten Trocknung ist der ausgehärtete Endzustand (C-Zustand) erreicht. Nach dem Trocknen im Ofen werden die Proben ein zweites Mal mit Hilfe des NIR-Messkopfes vermessen. Diese Messung liefert den Endpunkt der Trocknung.

Nach der Korrektur der Basislinienverschiebung zeigen die Spektren Veränderung der Absorptionsintensität der NIR-Banden bei ca. 1450 nm (Wasser) und bei ca. 1490 nm (N-H-Gruppen).

Man kann dann eine Korrelation zwischen den VC-Werten und den NIR-Spektren erstellen. Die Erstellung des Kalibriermodells, das den Zusammenhang zwischen den NIR-Spektren und den dazugehörigen VC-Werten beschreibt, erfolgt mit den multivariaten Regressionsverfahren (z. B. mit MLR-, PCR- oder PLS-Regressionsverfahren usw.). Die Auswertung wird über das gesamte Spektrum durchgeführt. Je länger die Probe im Ofen getrocknet wird, umso höher ist der Vernetzungsgrad. Es können dabei auch Proben vermessen werden, die einen höheren VC-Wert besitzen als üblicherweise angestrebt. Mit der Prüfung dieser untertrockneten Proben kann auch eine verbesserte Steuerung des Imprägnierkanals (Trockenkanals) erreicht werden. Die untertrockneten Proben haben einen Methylolgruppen-Gehalt, der über dem Optimum liegt, die übertrockneten haben einen Methylolgruppen-Gehalt, der unter dem Optimum liegt. Somit ist durch die Aufnahme der NIR-Spektren in Kombination mit einer Visualisierung eine Steuerung des Kanals anhand des Methylolgruppen-Gehaltes möglich. Mit diesen Daten kann also nach Kalibrierung für die verschiedenen Harz- und Papiersysteme eine grundsätzliche Voraussage über den Zustand der Aushärtung gemacht werden.

Die Prüfungen über den Aushärtungszustand können direkt am Auslauf einer Imprägnieranlage durchgeführt werden. Der NIR-Messkopf liefert in der Minute mehrere hunderte Messwerte, womit eine kontinuierliche Prozessüberwachung möglich ist. Für Qualitätsprüfungen im Lager kann mit einem mobilen Messgerät operiert werden.

Die NIR-Messung der Vernetzung kann direkt an der Produktionslinie (online Messung) mit einem mobilen Gerät (z.B. mit dem bereits zuvor erwähnten Gerät DA 7400 der Fa. Perten) oder im Labor (off-Line Messung) mit einem stationären Gerät (z.B. mit dem Gerät DA 7250 der Fa. Perten) erfolgen.

Messung des Vernetzungsgrades:
In einem Imprägnierkanal wird ein Overlay (Papiergewicht: 25 g/m²) mit einem Gemisch aus Melaminharz und Korund imprägniert. Die gesamte Auftragsmenge liegt bei ca. 75 g/m², wovon ca. 55 g Melaminharz sind. Der Imprägnierkanal wird mit verschiedenen Geschwindigkeiten gefahren. Von den einzelnen Geschwindigkeitsvarianten werden in einem solchen Versuch Proben gezogen und mit Hilfe des NIR-Messkopfes vermessen. Anschließend wurden sie auf ihren VC-Wert untersucht. Dabei wurden VC-Werte von 3,0 bis 8 % gefunden. Alle Proben wurden nach dem Trocknen ein zweites Mal mit dem NIR-Messkopf vermessen.

Aus den Spektren und den VC-Werten wurde anschließend eine Korrelation erstellt, die eine Vorhersage des VC-Wertes an anderen Overlay-Mustern zuließ.

Dieses Verfahren ist selbstverständlich auch bei Systemen einsetzbar, bei denen die vorgehärteten Harze direkt auf bedruckte oder nicht bedruckte Holzwerkstoffplatten aufgebracht werden. Bei diesen Platten stellen sich die gleichen Probleme wie bei imprägnierten Papieren. Auch hier ist es wichtig, den Aushärtungszustand des auf der Platte befindlichen Kunstharzes zu kennen. Dies gilt sowohl für eine verkettete Produktionslinie, bei der nach dem Harzauftrag und der Trocknung direkt die Weiterverarbeitung in einer Kurztakt (KT)- oder kontinuierlich laufenden Presse (Conti-Presse) erfolgt, als auch in einer nicht verketteten Produktionlinie, in der nach dem Harzauftrag und der Trocknung zunächst eine Zwischenlagerung stattfindet, bevor zu einem späteren Zeitpunkt das Zwischenprodukt weiter verarbeitet wird. In dem beschriebenen Fall ist die Bestimmung des Vernetzungszustandes umso wichtiger, da im Gegensatz zu imprägnierten Papieren, eine Qualitätsbestimmung der üblicherweise zu bestimmenden Parameter ansonsten kaum möglich ist. Durch eine direkt an der Produktionslinie durchgeführte Messung, kann bei Abweichungen vom Sollzustand unverzüglich eine Anpassung der Produktionsparameter vorgenommen werden. Dabei kann es sich z.B. um den Vorschub und die Trocknereinstellung (Lufttemperatur, Luftgeschwindigkeit und Luftführung) handeln. Letztlich besteht die Möglichkeit, die Steuerung der Trockner über den Aushärtungszustand des Kunstharzes zu steuern.

### Beispiel 5: Bestimmen der Abriebfestigkeit

Erstellen einer Referenzprobe und Kalibrierung:
a) Die Kalibirierung im Falle einer bereits ausgehärteten Verschleißschicht erfolgt durch Aufnahme eines NIR-Spektrums einer mit einer bereits ausgehärteten Verschleißschicht versehenen Trägerplatte als Referenzprobe in Analogie zu der unter b) direkt hierunter beschriebenen Vorgehensweise.
b) Die Kalibrierung im Falle einer noch nicht ausgehärteten Verschleißschicht erfolgt durch Aufnahme eines NIR-Spektrums einer mit einer Verschleißschicht versehenen, aber noch nicht verpressten Trägerplatte als Referenzprobe, die nach dem Pressvorgang auf die Abriebfestigkeit geprüft wird.

Hierfür wird eine bedruckte HDF-Platte an einer Beschichtungsanlage mittels Auftragswalze von oben mit flüssigem Melamin-Formaldehyd-Harz mit Glas- und Korund-Partikeln über mehrere Walzenauftragsmaschinen mit Zwischentrocknung gleichmäßig beschichtet. Die Menge der Feststoffpartikel in der Gesamtbeschichtung variiert je nach produzierter Abriebklasse und liegt zwischen 10 bis 50 g/m². Die verwendeten Feststoffpartikel weisen einen Durchmesser zwischen 10 und 100 µm auf.

Vor dem Pressvorgang in der KT-Presse wird von der beschichteten Trägerplatte ein NIR-Spektrum in einem vorbestimmten Abschnitt der Trägerplatte aufgenommen.

Danach wird die Platte in einer Kurztaktpresse bei 200°C und 40 bar für ca. 8 Sekunden lang gepresst. Dabei wird die Schutzschicht vollständig ausgehärtet. Nach dem Abkühlen der Platte werden mehrere (insbesondere vier) 10 cm × 10 cm Proben (P1-P4) für die Prüfung der Abriebfestigkeit entnommen. Die Probennahme für die Prüfung der Abriebfestigkeit erfolgt in dem Bereich der Platte, in dem das NIR-Spektrum aufgenommen wurde .

Die Abriebwerte werden gemäß dem Verfahren nach DIN EN 15468:2006 (direktbeschichtete Laminatböden ohne Overlay) unter Bezugnahme auf DIN EN 13329:2017 bestimmt und aus den Abriebwerten wird ein Mittelwert gebildet und dem gemessenen NIR-Spektrum zugeordnet. Auf diese Weise werden mehrere Referenzspektren von beschichteten Platten mit unterschiedlichen Farbdekoren aufgenommen. Aus den Referenzspektren wird ein Kalibrationsmodell erstellt, welches zur Ermittlung bzw. Vorhersage der Abriebfestigkeit einer unbekannten Probe genutzt werden kann. Die Erstellung des Kalibrationsmodells erfolgt mittels multivariater Datenanalyse. Dies geschieht mit einer geeigneten Analysesoftware, z.B. mit der bereits zuvor erwähnten Analysesoftware The Unscrambler der Firma CAMO.

Das NIR-Spektrum wurde vorliegend in einem Wellenlängenbereich zwischen 900 und 1700 nm aufgenommen. Für die Aufnahmen der NIR-Spektren wurde das bereits zuvor erwähnte NIR-Messgerät der Firma Perten verwendet, dessen Messkopf die Bezeichnung DA7400 trägt.

Online-Messung einer Harzbeschichtung mit Verschleißpartikel:

Die Messung erfolgt durch Aufnahme von NIR-Spektren von einer vorgetrockneten aber noch nicht in einer Kurztaktpresse nachvernetzten Kunstharzschicht (Melaminharz) auf einer Trägerplatte (z. B. eine HDF-Platte), die nach dem Pressvorgang auf das Verhalten gegenüber Abriebbeanspruchung geprüft wird. Durch die Messung einer Vielzahl von Proben sowohl spektroskopisch als auch gemäß der Norm zur Bestimmung der Abriebfestigkeit wurde zuvor über ein Kalibrationsmodell eine Abhängigkeit bestimmt.

Es werden NIR-Spektren von drei Proben mit gleicher Harzauftragsmenge, jedoch ohne Korund als Verschleißpartikel oder mit unterschiedlichen Mengen an Korund gemessen. Diese zeigen unterschiedliche Ergebnisse bei der Prüfung des Verhaltens gegenüber Abriebbeanspruchung. Die Proben wurden gemäß der DIN15468 und DIN EN 13329: 2017 - Laminatböden - Elemente mit einer Deckschicht auf Basis aminoplastischer, wärmehärtbarer Harze, Annex E - geprüft. Dabei wurde für die Probe 1 (120 µm Harzschicht ohne Korund, obere, gestrichelte Kurve in der DIN-Norm) bei der Prüfung des Verhaltens gegenüber Abriebbeanspruchung eine Verschleißklasse kleiner AC2, für Probe 2 (120µm Harzschicht mit 20g Korund/m²,untere, durchgehende Kurve in der DIN-Norm) eine Verschleißklasse AC 2, und für die Probe 3 (120 µm Harzschicht mit 40 g Korund/ m², mittlere Punkt-Strich-förmige Kurve in der DIN-Norm) eine Verschleißklasse AC 3 bestimmt. Die Proben 2 und 3 unterscheiden sich dabei demnach in der Menge der verschleißhemmenden Partikel.

Bei den ermittelten NIR-Spektren sind die chemischen Informationen der Absorption durch die auftretende an den Feststoffpartikel Streuung des NIR-Lichtes überlagert. Neben der geringen Basislinienverschiebung erkennt man leichte Formveränderung der Spektren, die auf die Streuung an den Feststoffpartikeln zurückzuführen ist. Bei erhöhtem Feststoffgehalt nimmt die Streuung insbesondere bei kürzeren Wellenlängen zu.

Bei Erstellung eines Regressionsmodells wird zusätzlich zu chemischen Informationen der Absorption auch die Streuung der NIR-Strahlung an den Feststoffpartikeln zur Bestimmung des Verhaltens gegenüber Abriebbeanspruchung herangezogen. Entsprechend werden bei der Erstellung des Regressionsmodells die spektroskopischen Daten mit den erhaltenen Werten bei der Prüfung des Verhaltens gegenüber Abriebbeanspruchung in Beziehung gesetzt.

Da die Streuung des NIR-Lichtes an den Feststoffpartikeln einen wesentlichen Beitrag zur Bestimmung des Verhaltens gegenüber Abriebbeanspruchung liefert, werden neben den

Hauptfaktoren, die die chemische Varianz der Proben erklären, auch weitere Hauptfaktoren berücksichtigt, die unter anderem die Morphologie der Beschichtung beschreiben. Die Hauptfaktoren sind dabei die Spitzen im Spektrum, die Streuung und die Basislinienverschiebung.

### Beispiel 6:

In einem Imprägnierkanal wird ein 30 g /m² Overlay in einem ersten Schritt in einer Imprägnierwanne mit einem Melaminharz (Feststoffgehalt: 55 Gew%) imprägniert. Die Arbeitsbreite des Trockners ist 2070 mm und der Vorschub bei ca. 50 m/min. Das Melaminharz enthält die üblichen Hilfsstoffe wie Härter, Netzmittel, Trennmittel usw. Hinter der Imprägnierwanne befindet sich eine Atemstrecke und ein Rakelsystem oder ein Quetschwalzenpaar, mit dem überschüssiges Harz entfernt wird. Der angestrebte Harzauftrag liegt bei ca. 300%. Vor einem Schwebetrockner befindet sich ein Streuer, mit dem ca. 20 g Korund/m² in das noch feuchte Melaminharz eingestreut wird. Das Korund hat die Korngröße F220 nach FEPA-Standard. Anschließend wird die Warenbahn in dem Schwebetrockner auf eine Restfeuchte von ca. 6 % getrocknet. Hinter dem Schwebetrockner befindet sich ein Kühlwalzensystem, mit dem das Imprägnat auf Raumtemperatur gekühlt wird. Hinter den Kühlwalzen befindet sich ein NIR-Multimesskopf, der sich auf einer Traverse über die Warenbahn bewegt und mit dem der Harzauftrag, die Vernetzung, die Feuchte und die aufgebrachte Korundmenge überwacht werden. Bei Abweichungen von den Sollvorgaben werden durch eine automatische Steuerung oder Regelung die Rakel/die Quetschwalzen, die Streumenge und/oder die Temperaturführung im Trockner geändert.

### Beispiel 7:

In einer Beschichtungsanlage werden bedruckte HDF-Platten (Format: 2800 × 2070 × 7 mm) zunächst mit einer Schicht aus Melaminharz versehen. Das Melaminharz wird über ein Walzenauftragsaggregat auf den Druck, der zuvor mit einem vorgetrockneten Melaminstrich von ca. 20 g Melaminharz fest /m² abgedeckt wurde, aufgebracht. Die Auftragsmenge liegt bei ca. 100 g Melaminharz flüssig/m². Der Feststoffgehalt des Harzes liegt bei ca. 55 Gew% und das Harz enthält die üblichen Hilfsstoffe (Härter, Netzmittel, Entschäumer usw.). In das Melaminharz werden ca. 30 g Korund /m² mit Hilfe eines Streuaggregats eingestreut. Das Korund hat die Korngröße F 220 nach dem zuvor bereits erwähnten FEPA-Standard. Durch ein Transportsystem werden die Platten durch einen NIR-Trockner hindurchtransportiert und getrocknet. Hinter dem Trockner befindet sich ein erster NIR-Multimesskopf, der auf einer Traverse montiert ist und der die Harzauftragsmenge, die aufgebrachte Korundmenge und die Feuchte der Platte bestimmt. Bei Abweichung von den Sollwerten erfolgt durch den NIR-Multimesskopf, der mit der Anlagensteuerung bzw. - regelung verbunden ist, die Anpassung der Anlagenparameter (Harzauftrag, Streumenge und Trocknertemperatur). In weiteren Walzenauftragswerken wird jeweils zweimal ca. 30 g Melaminharz flüssig/m² (Feststoffgehalt: ca. 55 Gew% mit den üblichen Hilfsstoffen) mit anschließender Zwischentrocknung (Umluft- oder IR-Trocknung) aufgetragen. Danach wird in einem weiteren Walzenauftragswerk ca. 60 g Melaminharz flüssig / m² (Feststoffgehalt: ca. 55 Gew% mit den üblichen Hilfsstoffen) aufgetragen. Danach werden mit einem Streuer ca. 20 g Glaskugeln /m² (Fa. Potters, Glaskugeltyp 065 - 90) aufgestreut. In einem NIR-Trockner wird das Harz getrocknet. Danach werden mit einem weiteren NIR-Multimesskopf die Auftragsmenge des Harzes und der Glaskugeln sowie die Feuchte und der Vernetzungsgrad des Harzes kontrolliert. Bei Abweichungen von den Sollwerten erfolgt eine automatische Anpassung durch die Anlagensteuerung bzw. -regelung, die mit dem weiteren NIR-Multimesskopf verbunden ist. In einem letzten Auftragswerk werden nochmals ca. 30 g Melaminharz flüssig/m² (Feststoffgehalt: ca. 55 Gew% mit den üblichen Hilfsstoffen) aufgetragen. Dieses Harz wird in einem IR-Trockner getrocknet. Danach wird die Platte mit einem imprägnierten Gegenzugpapier in einer Kurztaktpresse verpresst.

## Patentansprüche

1. Verwendung von in einer Produktionslinie zur Beschichtung von mindestens einem Trägermaterial mit mindestens einer Harzschicht bestimmten Parametern, insbesondere von mindestens zwei, drei oder vier gleichzeitig bestimmten Parametern, zur Steuerung der mindestens einen Produktionslinie,
wobei die Produktionslinie umfasst:
- mindestens einen NIR-Multimesskopf zur Aufnahme von mindestens einem NIR-Spektrum der auf das Trägermaterial aufgetragenen Harzschicht in einem Wellenlängenbereich zwischen 500 nm und 2500 nm, bevorzugt-zwischen 700 nm und 2000 nm, insbesondere bevorzugt zwischen 900 nm und 1700 nm und besonders vorteilhaft zwischen 1450 nm und 1550 nm; und
- mindestens ein Steuerungssystem umfassend mindestens eine computergestützte Auswerteeinheit und eine Datenbank,
- wobei der mindestens eine NIR-Multimesskopf jeweils mit dem mindestens einem Steuerungssystem mit Auswerteeinheit und Datenbank zur Prozessierung und Speicherung der aufgenommenen NIR-Daten verbunden ist,
- wobei die Auswerteeinheit konfiguriert ist, gleichzeitig mehrere gewünschte Parameter durch einen automatisierten Vergleich des für die auf das Trägermaterial aufgetragenen Harzschicht aufgenommenen einzigen NIR-Spektrums mit einem für die jeweiligen Parameter erstellten Kalibriermodell zu bestimmen,
- wobei die Datenbank konfiguriert ist, die so bestimmten Parameterdaten in der Datenbank zu speichern, wobei das Kalibriermodell anhand von Referenzproben wie folgt bestimmt wird:
- Aufnahme von mindestens einem NIR-Spektrum von mehreren Referenzproben mit jeweils unterschiedlichem Werten der gewünschten Parameter unter Verwendung von mindestens einem NIR-Multimesskopf in einem Wellenlängenbereich zwischen 500 nm und 2500 nm, bevorzugt zwischen 700 nm und 2000 nm, insbesondere bevorzugt zwischen 900 nm und 1700 nm, und besonders vorteilhaft zwischen 1450 nm und 1550 nm;
- Bestimmung der gewünschten Parameter der vermessenen Referenzproben mittels nicht-spektroskopischer Methoden;
- Zuordnung der bestimmten Parameter zu den jeweils aufgenommenen NIR-Spektren der vermessenen Referenzproben,
- Erstellung des Kalibriermodells für den Zusammenhang zwischen den spektralen Daten der NIR-Spektren und den dazugehörigen Parameterwerten mittels einer multivariaten Datenanalyse;
wobei die bestimmten Parameter einem "selbstlernenden" Al-basierten Auswertesystem (machine learning) zur weiteren Optimierung der Steuerung der mindestens einen Produktionslinie und/oder zur Vorhersage der Funktion der der mindestens einen Produktionslinie und/oder zur Optimierung des Anfahrprozesses der mindestens einen Produktionslinie zugeführt werden,

2. Verwendung nach Anspruch 1, **dadurch gekennzeichnet, dass** die bestimmten Parameter zur Optimierung des Anfahrprozesses der Produktionslinie eingesetzt werden.

3. Verwendung nach einem der vorhergehenden Ansprüche, **dadurch gekennzeichnet**, zur Optimierung des Anfahrprozess der Produktionslinie durch Vergleich der neu gemessenen Parameter mit den bereits vorhandenen Datensätzen der gewünschten Parameter und der Auswertung der sich ergebenden Differenzen die Produktionslinie schneller für die Produktion eingestellt und optimiert wird.

4. Verwendung nach einem der vorhergehenden Ansprüche, **dadurch gekennzeichnet, dass** die zeitliche Verkürzung des Anfahrens der Produktionslinie durch den Einsatz von Al-basierten System weiter verbessert wird.

5. Verwendung nach einem der vorhergehenden Ansprüche, **dadurch gekennzeichnet, dass** der Anfahrprozess der Produktionslinie nach einer Reparatur oder nach einer Regelwartung oder nach einer Probenentnahme, bei der die Anlage angehalten werden muss, erfolgt.

6. Verwendung nach einem der vorhergehenden Ansprüche, **dadurch gekennzeichnet, dass** der Anfahrprozess der Produktionslinie bei der Herstellung von einer Reihe kleinerer Chargen von bestimmten (unterschiedlichen) Produkttypen erfolgt.

7. Verwendung nach einem der vorhergehenden Ansprüche, **dadurch gekennzeichnet, dass** die bestimmten Parameter einem "selbstlernenden" Al-basierten Auswertesystem (machine learning) auch zur vorausschauenden Planung von Wartungsarbeiten oder Reparaturen der Produktionslinie zugeführt werden.

8. Verwendung nach einem der vorhergehenden Ansprüche, **dadurch gekennzeichnet, dass** die Parameter ausgewählt sind aus einer Gruppe umfassend die Menge der aufgetragenen Harzschicht, den Aushärtungsgrad und Vernetzungsgrad der aufgetragenen Harzschicht, den Feuchtegehalt der aufgetragenen Harzschicht, die Abriebfestigkeit und die Menge von auf die Harzschicht aufgestreuten abriebfesten Partikeln.

9. Verwendung nach einem der vorhergehenden Ansprüche, **dadurch gekennzeichnet, dass** für die Erstellung des Kalibriermodells spektrale Daten aus dem gesamten aufgenommenen Spektralbereich des NIR-Spketrums verwendet werden.

10. Verwendung nach einem der vorhergehenden Ansprüche, **dadurch gekennzeichnet, dass** für die Erstellung des Kalibriermodells spektrale Daten aus dem NIR-Spektralbereich zwischen 1450 nm und 1550 nm verwendet werden, die mittels geeigneter mathematischer Methoden vorbehandelt werden und anschließend der multivariaten Datenanalyse zugeführt werden.

11. Verwendung nach einem der vorhergehenden Ansprüche, **dadurch gekennzeichnet, dass** die Harzschicht aus einem formaldehydhaltiges Harz, bevorzugt ein Melamin-Formaldehyd-Harz, ein Harnstoff-Formaldehyd-Harz oder Gemisch aus beiden besteht.

12. Verwendung nach einem der vorhergehenden Ansprüche, **dadurch gekennzeichnet, dass** das mindesten eine Trägermaterial eine Papierlage, bevorzugt eine Dekorpapierlage oder eine imprägnierte Overlaypapierlage, oder eine Holzwerkstoffplatte, bevorzugt eine mitteldichte Faser (MDF)-, hochdichte Faser (HDF)- oder Grobspan (OSB)-, eine Sperrholzplatte oder eine Holz-Kunststoff-Komposit-Platte (WPC) oder eine Stein-Kunststoff-Komposit-Platte (SPC) ist.

13. Verwendung nach einem der vorhergehenden Ansprüche, **dadurch gekennzeichnet**, das die Produktionslinie eine Imprägnieranlage oder eine Produktionslinie zur Herstellung von Werkstoffplatten ist.

## Claims

1. Use of parameters determined in a production line for coating at least one carrier material with at least one resin layer, in particular at least two, three or four parameters determined simultaneously, for controlling at least one production line,
wherein the production line includes:
- at least one NIR multi-meter head for recording at least one NIR spectrum of the resin layer applied to the carrier material in a wavelength range between 500 nm and 2500 nm, preferably between 700 nm and 2000 nm, particularly preferably between 900 nm and 1700 nm and especially advantageously between 1450 nm and 1550 nm; and
- at least one control system comprising at least one computer aided evaluation unit and a database,
- wherein the at least one NIR multi-meter head is connected to the at least one control system with evaluation unit and database for processing and storing the recorded NIR data,
- wherein the evaluation unit is configured to simultaneously determine several desired parameters by an automated comparison of the single NIR spectrum recorded for the resin layer applied to the carrier material with a calibration model created for the respective parameters,
- whereby the database is configured to store the parameter data determined in this way in the database,
where the calibration model is determined using reference samples as follows:
- Recording of at least one NIR spectrum of several reference samples, each with different values of the desired parameters, using at least one NIR multi- measurement head in a wavelength range between 500 nm and 2500 nm, preferably between 700 nm and 2000 nm, particularly preferably between 900 nm and 1700 nm, and especially advantageously between 1450 nm and 1550 nm;
- Determination of the desired parameters of the measured reference samples using non-spectroscopic methods;
- Assignment of the determined parameters to the recorded NIR spectra of the measured reference samples,
- Creation of the calibration model for the relationship between the spectral data of the NIR spectra and the corresponding parameter values by means of multivariate data analysis,
wherein the determined parameters are fed to a "self-learning" Al-based evaluation system (machine learning) for further optimization of the control of the at least one production line and/or for predicting the function of the at least one production line and/or for optimizing the start-up process of the at least one production line,

2. Use according to claim 1, **characterized in that** the determined parameters are used to optimize the start-up process of the production line.

3. Use according to one of the preceding claims, **characterized in that** the production line is adjusted and optimized more quickly for production by comparing the newly measured parameters with the already existing data sets of the desired parameters and evaluating the resulting differences in order to optimize the start-up process of the production line.

4. Use according to one of the preceding claims, **characterized in that** the time reduction of the start-up process of the production line is further improved by the use of Al-based systems.

5. Use according to one of the preceding claims, **characterized in that** the start-up process of the production line takes place after a repair or after regular maintenance or after sampling, during which the system must be stopped.

6. Use according to one of the preceding claims, **characterized in that** the start-up process of the production line takes place during the manufacture of a series of smaller batches of certain (different) product types.

7. Use according to one of the preceding claims, **characterized in that** the determined parameters are fed to a "self-learning" Al-based evaluation system (machine learning) also for predictive planning of maintenance work or repairs of the production line.

8. Use according to one of the preceding claims, **characterized in that** the parameters are selected from a group comprising the amount of the applied resin layer, the degree of curing and degree of crosslinking of the applied resin layer, the moisture content of the applied resin layer, the abrasion resistance and the amount of abrasion-resistant particles sprinkled on the resin layer.

9. Use according to one of the preceding claims, **characterized in that** spectral data from the entire recorded spectral range of the NIR spectrum are used to create the calibration model.

10. Use according to one of the preceding claims, **characterized in that** spectral data from the NIR spectral range between 1450 nm and 1550 nm are used to create the calibration model, which are pretreated by means of suitable mathematical methods and then fed to the multivariate data analysis.

11. Use according to one of the preceding claims, **characterized in that** the resin layer consists of a formaldehyde-containing resin, preferably a melamine-formaldehyde resin, a urea-formaldehyde resin or a mixture of both.

12. Use according to one of the preceding claims, **characterized in that** the at least one carrier material is a paper layer, preferably a decorative paper layer or an impregnated overlay paper layer, or a wood-based panel, preferably a medium-density fibre (MDF), high-density fibre (HDF) or coarse particle board (OSB), a plywood panel or a wood-plastic composite panel (WPC) or a stone-plastic composite panel (SPC).

13. Use according to one of the preceding claims, **characterized in that** the production line is an impregnation line or a production line for the manufacture of material boards.

## Revendications

1. Utilisation de paramètres déterminés dans une ligne de production pour le revêtement d'au moins un matériau de support avec au moins une couche de résine, en particulier d'au moins deux, trois ou quatre paramètres déterminés simultanément, pour la commande de l'au moins une ligne de production,
dans laquelle la ligne de production comprend :
- au moins une tête de mesure multiple NIR pour l'acquisition d'au moins un spectre NIR de la couche de résine appliquée sur le matériau de support dans une gamme de longueurs d'onde comprise entre 500 nm et 2500 nm, de préférence entre 700 nm et 2000 nm, de manière particulièrement préférée entre 900 nm et 1700 nm et de manière particulièrement avantageuse entre 1450 nm et 1550 nm ; et
- au moins un système de commande comprenant au moins une unité d'évaluation assistée par ordinateur et une base de données,
- dans laquelle l'au moins une tête de mesure multiple NIR est reliée respectivement à l'au moins un système de commande avec l'unité d'évaluation et la base de données pour le traitement et le stockage des données NIR acquises,
- dans laquelle l'unité d'évaluation est configurée pour déterminer simultanément plusieurs paramètres souhaités par une comparaison automatisée du seul spectre NIR acquis pour la couche de résine appliquée sur le matériau de support avec un modèle d'étalonnage élaboré pour les paramètres respectifs,
- dans laquelle la base de données est configurée pour stocker les données de paramètres ainsi déterminées dans la base de données,
dans laquelle le modèle d'étalonnage est déterminé sur la base d'échantillons de référence de la façon suivante :
- acquisition d'au moins un spectre NIR de plusieurs échantillons de référence avec respectivement des valeurs différentes des paramètres souhaités au moyen d'au moins une tête de mesure multiple NIR dans une gamme de longueurs d'onde comprise entre 500 nm et 2500 nm, de préférence entre 700 nm et 2000 nm, de manière particulièrement préférée entre 900 nm et 1700 nm, et de manière particulièrement avantageuse entre 1450 nm et 1550 nm ;
- détermination des paramètres souhaités des échantillons de référence mesurés au moyen de méthodes non spectroscopiques ;
- attribution des paramètres déterminés aux spectres NIR respectivement acquis des échantillons de référence mesurés,
- élaboration du modèle d'étalonnage pour la relation entre les données spectrales des spectres NIR et les valeurs de paramètres correspondantes au moyen d'une analyse de données multivariable ;
dans laquelle les paramètres déterminés sont amenés à un système d'évaluation basé sur l'IA « à auto-apprentissage » (apprentissage automatique) pour poursuivre l'optimisation de la commande de l'au moins une ligne de production et/ou pour la prédiction du fonctionnement de l'au moins une ligne de production et/ou pour l'optimisation du processus de démarrage de l'au moins une ligne de production.

2. Utilisation selon la revendication 1, **caractérisée en ce que** les paramètres déterminés sont utilisés pour l'optimisation du processus de démarrage de la ligne de production.

3. Utilisation selon l'une quelconque des revendications précédentes, **caractérisée en ce que** pour l'optimisation du processus de démarrage de la ligne de production par comparaison des paramètres récemment mesurés aux ensembles de données déjà présents des paramètres souhaités et l'évaluation des différences résultantes la ligne de production est réglée et optimisée plus rapidement pour la production.

4. Utilisation selon l'une quelconque des revendications précédentes, **caractérisée en ce que** la réduction de temps du démarrage de la ligne de production est davantage améliorée par l'utilisation du système basé sur l'IA.

5. Utilisation selon l'une quelconque des revendications précédentes, **caractérisée en ce que** le processus de démarrage de la ligne de production s'effectue après une réparation ou après un entretien programmé ou après un prélèvement d'échantillon pour lequel l'installation nécessite d'être arrêtée.

6. Utilisation selon l'une quelconque des revendications précédentes, **caractérisée en ce que** le processus de démarrage de la ligne de production s'effectue lors de la fabrication d'une série de plus petits lots de certains types de produits (différents).

7. Utilisation selon l'une quelconque des revendications précédentes, **caractérisée en ce que** les paramètres déterminés sont amenés à un système d'évaluation basé sur l'IA « à auto-apprentissage » (apprentissage automatique) également pour la planification anticipée de travaux d'entretien ou réparations de la ligne de production.

8. Utilisation selon l'une quelconque des revendications précédentes, **caractérisée en ce que** les paramètres sont sélectionnés dans un groupe comprenant la quantité de couche de résine appliquée, le degré de durcissement et le degré de réticulation de la couche de résine appliquée, le taux d'humidité de la couche de résine appliquée, la résistance à l'abrasion et la quantité de particules résistantes à l'abrasion répandues sur la couche de résine.

9. Utilisation selon l'une quelconque des revendications précédentes, **caractérisée en ce que** pour l'élaboration du modèle d'étalonnage les données spectrales provenant de l'ensemble du domaine spectral acquis du spectre NIR sont utilisées.

10. Utilisation selon l'une quelconque des revendications précédentes, **caractérisée en ce que** pour l'élaboration du modèle d'étalonnage les données spectrales provenant du domaine spectral NIR comprises entre 1450 nm et 1550 nm sont utilisées, qui sont préalablement traitées au moyen de méthodes mathématiques adaptées et ensuite amenées à l'analyse de données multivariable.

11. Utilisation selon l'une quelconque des revendications précédentes, **caractérisée en ce que** la couche de résine est constituée d'une résine contenant du formaldéhyde, de préférence une résine mélamine-formaldéhyde, une résine urée-formaldéhyde ou un mélange des deux.

12. Utilisation selon l'une quelconque des revendications précédentes, **caractérisée en ce que** l'au moins un matériau de support est une couche de papier, de préférence une couche de papier décoratif ou une couche de papier overlay imprimée, ou un panneau en matériau dérivé du bois, de préférence un panneau de fibres moyenne densité (MDF), de fibres haute densité (HDF) ou de lamelles orientées (OSB), un panneau de contreplaqué ou un panneau composite bois-matière plastique (WPC) ou un panneau composite pierre-plastique (SPC).

13. Utilisation selon l'une quelconque des revendications précédentes, **caractérisée en ce que** la ligne de production est une installation d'imprégnation ou une ligne de production pour la fabrication de panneaux de matériau.
